# EUROPEAN PATENT APPLICATION

(11) **EP 2 022 686 A2**
(43) Date of publication of application: **11.02.2009**
(21) Application number: 08161678.1
(22) Date of filing: 01.08.2008
(51) Int. Cl.: B60R 25/00, B60R 25/10

(54) **Information processing system, information processing apparatus amd method and program**

(30) Priority: 09.08.2007 JP 2007207402
(71) Applicant: Omron Corporation, Kyoto-shi, Kyoto 600-8530 (JP)
(72) Inventor: Ido, Yusaku, Kyoto Kyoto 600-8530 (JP); Masato, Kasashima, Kyoto Kyoto 600-8530 (JP)
(74) Representative: Brykman, Georges

(57) **Abstract**

Easy execution of proximity communication with a specific vehicle is to be enabled. A mobile proximity radio-communication terminal receives an event-report application which is sent from an application server for causing a mode to transit to a vehicle communication mode which performs proximity communication with an on-board proximity radiocommunication terminal mounted on a vehicle that is suffering from generation of abnormality and permits the mode to transit into the vehicle communication mode based on such event-report application and then sends authentication information to the on-board proximity radiocommunication terminal by proximity communication. The on-board proximity radiocommunication terminal receives the authentication information from the mobile proximity radiocommunication terminal and controls, based such authentication information, a prespecified operation relating to the vehicle to thereby perform proximity communication with a specific vehicle, thereby making it possible to permit this vehicle to perform a specific operation. This invention is applicable to information processing systems.

## Description

### BACKGROUND OF THE INVENTION

### 1. Field of the Invention

The present invention relates to information a processing system, information processing apparatus and method along with a program, and more particularly to an information processing system capable of easily performing proximity communication with a specific vehicle and an information processing apparatus, method and program for use therein.

### 2. Description of Related Art

In recent years, the theft of vehicle such as automobiles becomes a social problem, and its modus operandi is becoming artful more and more. Traditionally, in cases where a stolen car is specified by an owner or maker of such car or a user such as a police person, the user performs by himself the checking of vehicle information by performing an operation for conducting a search for a desired vehicle from a list of information items concerning pre-registered vehicles.

Additionally, a vehicle identification technique has been proposed for reading an IC tag with prespecified information being written into a number plate of vehicle and for catching from outside the information as transmitted from the IC tag to thereby identify the vehicle (for example, see JP-A-2002-260164). Further, a server apparatus has also been proposed, which reads by analysis a number plate from image data that was picked up by camera functionality of a mobile terminal device, for searching based on such readout result a parking offense history being stored in a database, for performing checking of the registration of a stolen car, and for returning the checkup result to the mobile terminal device (e.g., see JP-A-2005-301377).

However, there is a problem relating to the presence of a risk which follows: when an attempt is made to specify a vehicle, such as a stolen car, it is impossible to reliably specify the vehicle. For example, in case the user conducts a search for certain information concerning a stolen car from the information as to preregistered vehicles, it is necessary to examine, for designation, conditions for specifying the stolen car from an automobile inspection certificate or the like as search conditions, the conditions including an automobile registration number, automobile registration type, etc.; however, there still remains the possibility that an ability is lost to specify such vehicle as the stolen car based on only its outer appearance when the automobile registration number emblem (number plate) has been replaced by another one.

Additionally, when performing the operation for searching a specific vehicle, the user is required to see and affirm the automobile inspection certificate or else to keep in mind the information relating to the automobile registration number, automobile registration type, car body number, maintenance record and others, for example, which information is for use as the searching conditions; however, the user can get the search conditions mixed up with wrong ones by human mistakes, and, in addition, examining the information as to such vehicle per se is a troublesome and time-consuming work.

### SUMMARY OF THE INVENTION

The present invention has been made in view of the above-stated background, and its object is to provide an approach to enabling the user to reliably specify his or her aimed vehicle by performing proximity communication with a specific vehicle.

An information processing system in accordance with a first aspect of this invention is an information processing system having a mobile electronic device and an information processing apparatus to be mounted on a vehicle, wherein the electronic device includes a first reception means for receiving first information to be sent from another information processing apparatus, which information is for transition to a state for performing proximity communication with the information processing apparatus, a first control means for controlling, based on the first information received, a state in such a way as to transit into the state for performing proximity communication with the information processing apparatus, and a transmission means for sending, when being in the state capable of performing proximity communication with the information processing apparatus, second information to the information processing apparatus, the second information being for control of a predetermined operation in relation to the vehicle, and wherein the information processing apparatus includes a second reception means for receiving the second information as sent from the electronic device, and a second control means for controlling the predetermined operation relating to the vehicle based on the second information received.

In the information processing system in accordance with the first aspect of this invention, the electronic device is configured to receive first information which is to be sent from another information processing apparatus and which is for performing proximity communication with the information processing apparatus. Based on the received first information, a present state is controlled in such a way as to transit to the state for performing proximity communication with the information processing apparatus. When being set in the state capable of performing proximity communication with the information processing apparatus, second information for control of a prespecified operation relating to a vehicle is transmitted to the information processing apparatus. At the information processing apparatus, the second information being sent from the electronic device is received so that the prespecified operation relating to the vehicle is controlled based on the second information received.

Accordingly, by performing proximity communication with a specific vehicle, it is possible to specify the intended vehicle, such as a stolen car, for example.

The electronic device is configured, for example, by a mobile phone, portable information terminal, clock, computer, remote controller, pager, game machine, multimedia equipment, or handheld audio device.

The vehicle is configured, for example, by various types of automobiles or two-wheeled vehicles.

The first reception means is configured, for example, by a communication unit as included in a program to be executed by a CPU (central processing unit) or the like. The communication unit receives first information to be sent from another information processing apparatus, which information is for transition to the state for performing proximity communication with the information processing apparatus.

The another information processing apparatus is configured, for example, by an application server or a vehicle monitor server, which provides first information for transition to the state for performing proximity communication with the information processing apparatus.

The first control means is configured, for example, by a mode control unit which is included in a program to be executed by the CPU or else. The mode control unit provides control, based on the first information received, in such a way as to permit transition to the state for performing proximity communication with the information processing apparatus.

The transmission means is configured, for example, by a proximity ID unit which is configured by a radio IC tag for performing radio-communications. The proximity ID unit operates, when being set in the state capable of performing proximity communication with the information processing apparatus, to send forth the second information for controlling a prespecified operation concerning the vehicle toward the information processing apparatus.

The information processing apparatus is configured, for example, by an on-board information processing apparatus having reader/writer functionality.

The second reception means is configured, for example, by a proximity ID access unit which is constructed from a reader/writer. The proximity ID access unit sends the second information to be sent from electronic equipment.

The second control means is configured, for example, by a vehicle control unit, which is included in a program to be executed by the CPU or else. The vehicle control unit controls a predetermined operation concerning the vehicle based on the second information received.

An information processing apparatus in accordance with a second aspect of this invention is an information processing apparatus to be mounted in a vehicle, which apparatus is for performing, based on first information for transition to the state for performing proximity communication, proximity communication with a mobile electronic device being transited to the state for performing proximity communication, wherein the apparatus comprises a receiver means for receiving, when being set in the state capable of performing proximity communication with the electronic device, second information to be sent from the electronic device for controlling a prespecified operation relating to the vehicle, and a control means for controlling the prespecified operation relating to the vehicle based on the second information received.

In the information processing apparatus in accordance with the second aspect of this invention, when being in the state capable of performing proximity communication with electronic device, the prespecified operation relating to the vehicle is controlled based on the received second information for controlling the prespecified operation relating to the vehicle, which information is sent to itself from the electronic device.

Accordingly, by performing proximity communication with a specific proximity commination terminal, it is possible to allow the vehicle to perform various operations, for example.

The information processing apparatus is configured, for example, by an information processing apparatus for on-board use, which has reader/writer functionality.

The reception means is arranged, for example, by a proximity ID access unit constituted from a reader/writer. The proximity ID access unit receives the second information to be sent from electronic device.

The control means is configured, for example, by an on-board control unit being included in a program to be executed by CPU or the like. The on-board control unit controls a prespecified operation relating to the vehicle based on the received second information.

It is possible to arrange the apparatus to further comprise a detection means for detecting abnormality occurrable at the vehicle and a transmitter means for sending, when such abnormality is detected, third information for identification of the vehicle toward electronic device.

It is possible for a person who owns the electronic device to provide an authentication means for authenticating whether he or she is an authorized person of the vehicle. The transmitter means is arrangeable to send, upon detection of abnormality, the third information to the electronic device in the case of failure to authenticate whether s/he is the authorized person of the vehicle.

It is possible to further provide an authentication means for authenticating whether the received second information is the information as sent to itself whereas the control means is arrangeable to control operations of the on-board apparatus installed in the vehicle based on the received second information in case it is authenticated that the information is the information sent to itself.

The on-board apparatus is configured, for example, by an engine control device, fuel tank control device, open/close unit control device, wireless communication device, navigation device, audio device, television (TV) set, etc.

An information processing method in accordance with the second aspect of this invention is an information processing method for use in an information processing apparatus as mounted on a vehicle for performing, based on first information which permits transition to a state for performing proximity communication, mutual proximity communication with a mobile electronic device being presently transited to the state for performing proximity communication, wherein the method includes a first control step of controlling, when being set in a state capable of performing proximity communication with the electronic device, reception of second information to be sent to itself from the electronic device for control of a prespecified operation relating to the vehicle, and a second control step of controlling the prespecified operation relating to the vehicle based on the second information received.

In the information processing method in accordance with second aspect of this invention, when being set in the state capable of performing proximity communication with electronic equipment, reception of the second information to be sent from the electronic device to itself for control of a prespecified operation relating to the vehicle of interest is controlled; then, based on the second information received, the prespecified operation relating to the vehicle is controlled.

Accordingly, by performing proximity communication with a specific proximity communication terminal, it is possible for the vehicle to perform various kinds of operations, for example.

This first control step is configured by a first control step of controlling reception of second information to be sent from an electronic device to itself for control of a prespecified operation relating to the vehicle when being set in the state capable of performing proximity communication with the electronic device whereas the second control step is configured by a second control step of controlling the prespecified operation relating to the vehicle based on the second information received.

A program in accordance with the second aspect of this invention is a program for causing a computer of an information processing apparatus mounted on a vehicle for performing mutual proximity communication with a mobile electronic device being presently transited to a state for performing proximity communication based on first information for transition to the state for performing proximity communication, wherein the program includes a first control step of controlling, when being set in a state capable of performing proximity communication with the electronic device, reception of second information to be sent to itself from the electronic device for control of a prespecified operation relating to the vehicle, and a second control step of controlling the prespecified operation relating to the vehicle based on the second information received.

Accordingly, by performing proximity communication with a specific proximity communication terminal, it is possible for the vehicle to perform various kinds of operations, for example.

The program in accordance with the second aspect of this invention is recorded in a predetermined recording medium, read out by a drive for example, and installed in an information processing apparatus. The recording medium is configured by removable media including a magnetic disk, such as floppy (registered trade name) disk, an optical disk such as CD-ROM (Compact Disk Read Only Memory), DVD-ROM (Digital Versatile Disk) or else, magneto-optical disk such as MD (Mini-Disc) (registered trade name) or semiconductor memory.

As stated above, according to the first aspect of this invention, it is possible to easily perform proximity communication with a specific vehicle. Especially, according to the first aspect of this invention, by performing proximity communication with the specific vehicle, it is possible to specify the vehicle, such as a stolen car, for example.

According to the second aspect of this invention, it is possible to easily perform proximity communication with a specific proximity communication terminal. Especially, according to the second aspect of this invention, by perform proximity communication with the specific proximity communication terminal, it is possible to permit the vehicle to perform various kinds of operations, for example.

### BRIEF DESCRIPTION OF THE DRAWINGS

Fig. 1 is a block diagram showing one embodiment of an information processing system incorporating the principles of this invention.
Fig. 2 is a block diagram showing a functional arrangement example of a mobile proximity radiocommunication terminal.
Fig. 3 is a block diagram showing a functional arrangement example of an on-board proximity radiocommunication terminal.
Fig. 4 is a block diagram showing an arrangement example of a checkup information center server.
Fig. 5 is a flow chart for explanation of vehicle information transfer processing to be performed by a mobile proximity radiocommunication terminal of Fig. 1.
Fig. 6 is a flowchart for explanation of vehicle information notify processing to be performed by the on-board proximity radiocommunication terminal of Fig. 1.
Fig. 7 is a flowchart for explanation of vehicle information check processing to be done by a checkup information center server of Fig. 1.
Fig. 8 is a flowchart for explanation of check information reception processing to be done by the mobile proximity radiocommunication terminal of Fig. 1.
Fig. 9 is a block diagram showing another embodiment of the information processing system incorporating the principles of this invention.
Fig. 10 is a flowchart for explanation of vehicle operation request transmit processing to be done by a mobile proximity radiocommunication terminal of Fig. 9.
Fig. 11 is a flowchart for explanation of vehicle operation information generation processing to be done by an on-board monitor server of Fig. 9.
Fig. 12 is a flowchart for explanation of vehicle operation information transfer processing to be done by the mobile proximity radiocommunication terminal of Fig. 9.
Fig. 13 is a flowchart for explanation of vehicle operation information analysis processing to be done by an on-board proximity radiocommunication terminal of Fig. 9.
Fig. 14 is a block diagram showing a configuration of a personal computer.

### DESCRIPTION OF THE PREFERRED EMBODIMENTS

Embodiments of the present invention will be explained with reference to the accompanying drawings below.

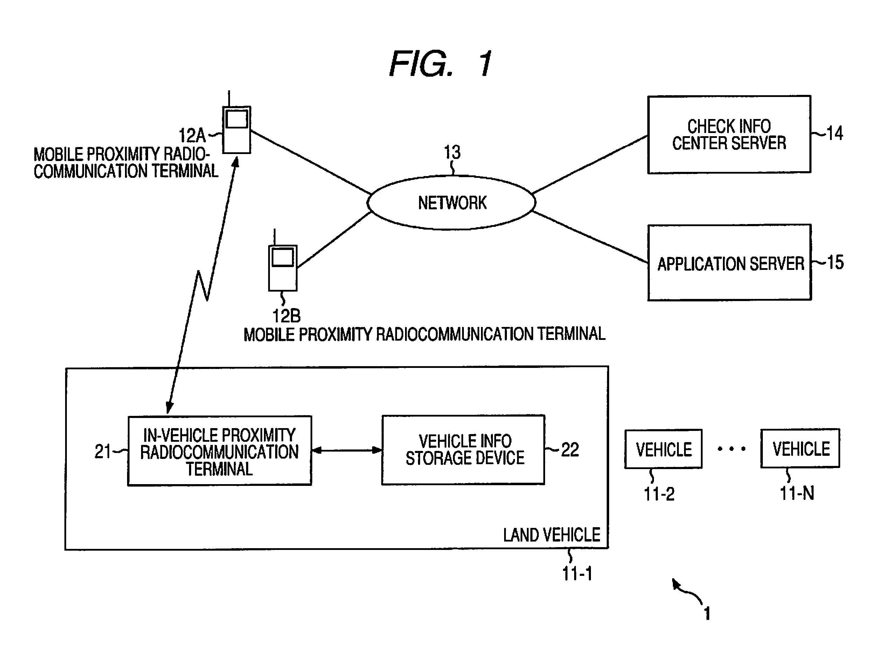

Fig. 1 is a block diagram showing one embodiment of an information processing system incorporating the principles of this invention.

The information processing system 1 is configured to include vehicles 11-1 to 11-N, portable or "mobile" proximity radio-communication terminal 12A, mobile proximity radiocommunication terminal 12B, checkup information center server 14 and application server 15. In the information processing system 1, the mobile proximity radiocommunication terminal 12A uses electrical waves with a prespecified frequency for example to perform wireless proximity communication with a respective one of the vehicles 11-1 to 11-N. Additionally, the mobile proximity radiocommunication terminal 12A, mobile proximity radiocommunication terminal 12B, checkup information center server 14 and application server 15 are linked together via a network 13 made up of the Internet or the like.

An on-board proximity radiocommunication terminal 21 and vehicle information storage device 22 are provided in the vehicles 11-1 to 11-N, respectively, such as various types of automobiles (e.g., private car, truck, bus, etc.), two-wheeled vehicles and others. The on-board proximity radiocommunication terminal 21 and vehicle information storage device 22 are linked to each other via an on-board LAN (Local Area Network), such as CAN (Controller Area Network) for example.

Note here that although in the example of Fig. 1 the on-board proximity radiocommunication terminal 21 and vehicle information storage device 22 are represented only for the vehicle 11-1 in order to make the explanation simpler, each of the vehicles 11-2 to 11-N is actually configured to include the on-board proximity radiocommunication terminal 21 and vehicle information storage device 22 in a similar way to the vehicle 11-1. Additionally, in cases where there is no need to identify each of the vehicles 11-1 to 11-N from the others, the explanation will be given while letting them be called the vehicles 11 hereinafter.

The on-board proximity radiocommunication terminal 21 is equipped with reader/writer functionality; for example, it performs electromagnetic induction-based proximity communication using a carrier wave with a predetermined frequency between it and the mobile proximity radiocommunication terminal 12A, which has a built-in proximity ID, such as RFID (Radio Frequency Identification) IC tag that performs wireless communications (as will be referred to as IC tag hereinafter). The on-board proximity radiocommunication terminal 21 acquires information concerning the vehicle 11-1 as stored in its vehicle information storage device 22 (hereafter, referred to as vehicle information).

Here, the vehicle information refers to the information that uniquely specifies the vehicle 11 with the on-board proximity radiocommunication terminal 21 and vehicle information storage device 22 being installed therein. For example, the vehicle information is recorded in the vehicle information storage device 22 in the manufacture of the vehicle 11 or at the time of its registration for example, wherein the contents thereof are not rewritable in any way. With this arrangement, designating certain vehicle information makes it possible to specify the vehicle 11 with such vehicle information being recorded therein from among a plurality of vehicles. The vehicle information may alternatively be recorded by the on-board proximity radiocommunication terminal 21, rather than the vehicle information storage device 22.

The vehicle information storage device 22 is comprised of a memory for readout of once-written information, such as a ROM (Read Only Memory), i.e., read-only storage device, for storing therein vehicle information concerning the vehicle 11. The vehicle information storage device 22 is responsive to receipt of a request from the on-board proximity radiocommunication terminal 21, for supplying the recorded vehicle information to the on-board proximity radiocommunication terminal 21.

The mobile proximity radiocommunication terminal 12A is configured from equipment having a built-in IC tag, such as a mobile cellular phone, for example, and performs proximity communication with the on-board proximity radiocommunication terminal 21 having the reader/writer functionality. More precisely, for example, the mobile proximity radiocommunication terminal 12A receives by proximity communication the vehicle information from the on-board proximity radiocommunication terminal 21.

In addition, the mobile proximity radiocommunication terminal 12A performs, via the network 13, communications with equipment which is linked to the network 13, such as the checkup information center server 14 or the application server 15, for example. Practically, the mobile proximity radiocommunication terminal 12A sends forth the vehicle information that was received from the on-board proximity radiocommunication terminal 21 toward the checkup information center server 14 over the network 13, for example.

Note that an explanation will be given below under an assumption that the mobile proximity radiocommunication terminal 12A is a terminal which is owned by a person other than the truly authorized person of the vehicle 11-1 (referred to hereinafter as third person).

Also note that in this embodiment, examples of the authorized person include a car possessor, a car manager and his or her participants who are to be authenticated as the authorized person. More precisely, the possessor of the vehicle is a true owner of such vehicle; the participants of the car owner may include his or her family members of the privately owned car or a known personnel who is allowed to use the car. Additionally, examples of the car manager are a driver of a business-use car, maintenance worker or his or her supervisor; examples of the participants of the car manager are a fellow passenger or a serviceman who is requested or ordered to drive the car from the maintenance worker.

The mobile proximity radiocommunication terminal 12B is comprised, for example, of a mobile phone or else, which performs communications with the checkup information center server 14 via the network 13. More specifically, the mobile proximity radiocommunication terminal 12B receives a checkup result to be sent from the checkup information center server 14 over the network 13 and then displays such check result.

The explanation below is given under an assumption that the mobile proximity radiocommunication terminal 12B is a terminal device which is owned by an authorized person of the vehicle 11-1. As the mobile proximity radiocommunication terminal 12B is merely able to receive the check result being sent from the checkup information center server 14, this terminal may be an IC tag-built device capable of performing proximity communications in a similar manner to the mobile proximity radiocommunication terminal 12A or, alternatively, may be a device which has no such IC tag being built therein and which is incapable of performing proximity communications, unlike the mobile proximity radiocommunication terminal 12A. Further note that in order to simplify the explanation, the explanation below assumes that it is simply called the mobile proximity radiocommunication terminal 12 in cases where it is not needed to distinguish the mobile proximity radiocommunication terminal 12A and the mobile proximity radiocommunication terminal 12B from each other.

Examples of the network 13 are a wireless packet communication network, Internet, public telephone network, and specific network using an exclusive line(s), each of which is for permitting mutual communication between any two of the mobile proximity radiocommunication terminal 12A, mobile proximity radiocommunication terminal 12B, checkup information center server 14 and application server 15. An example is that in the case of the mobile proximity radiocommunication terminal 12A being a cellular phone, the network 13 is configured to provide access to either the checkup information center server 14 or the application server 15 from the mobile proximity radiocommunication terminal 12A through a base station (not shown) of the cellular phone in accordance with predetermined protocols, such as TCP/IP (Transmission Control Protocol/Internet Protocol).

The checkup information center server 14 is configured, for example, by a private or "dedicated" server under the management of a business party (e.g., security company) which provides expected services by use of the information processing system 1, wherein the server performs predetermined processing tasks for checking and specifying the vehicles 11 (referred to hereinafter as checkup processing). More specifically, the checkup information center server 14 executes the check processing to thereby compare the vehicle information of a vehicle 11, which is sent from the mobile proximity radiocommunication terminal 12A via the network 13, with pre-registered vehicle information for identifying a given vehicle 11 (referred to hereafter as registered vehicle information) and then specify the vehicle 11.

The application server 15 is configured, for example, by a dedicated server under the management of a business party (e.g., security company) which provides expected services by use of the information processing system 1 or a maker that has manufactured a vehicle(s) 11, wherein the server stores therein an application program (called the event-report application) for notifying its associated equipment, such as for example the checkup information center server 14 or else, of the occurrence of an abnormal situation (s) at a vehicle (s) 11, e.g., car theft, stealing car-equipped goods (breaking into vehicle), mischief against car, etc. The application server 15 is responsive to receipt of a request from the mobile proximity radiocommunication terminal 12A, for sending its stored event-report application to the mobile proximity radiocommunication terminal 12A via the network 13. Whereby, the mobile proximity radiocommunication terminal 12A is expected to download the event-report application from the application server 15 via the network 13.

Although in Fig. 1 one specific example is shown which provides one-by-one the mobile proximity radiocommunication terminal 12A, mobile proximity radiocommunication terminal 12B, network 13, checkup information center server 14 and application server 15 in order to simplify the explanation, it is possible, as a matter of course, to provide more than two separate devices for each of them.

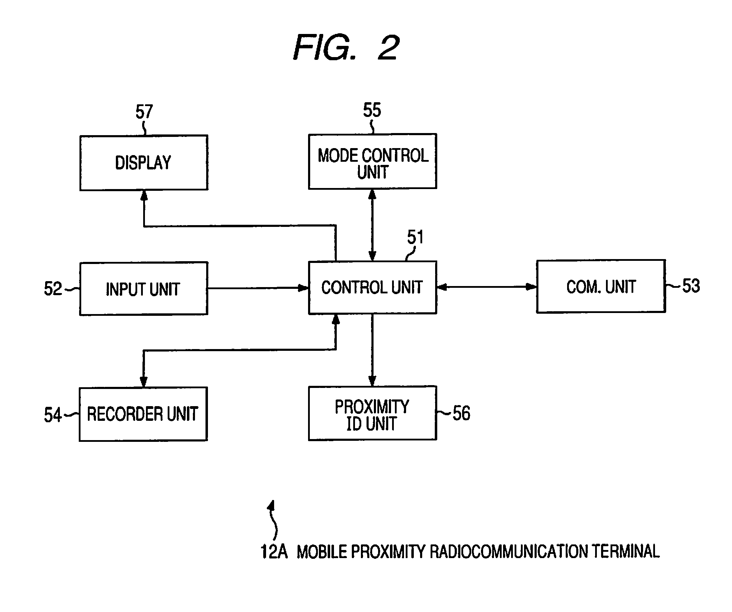

Fig. 2 is a block diagram showing a functional arrangement example of the mobile proximity radiocommunication terminal 12A.

The mobile proximity radiocommunication terminal 12A is configured to include a control unit 51, input unit 52, communication unit 53, recording unit 54, mode control unit 55, proximity ID unit 56, and display unit 57.

The control unit 51 controls operations of respective parts of the mobile proximity radiocommunication terminal 12A.

The input unit 52 supplies a signal corresponding to an operation by a user (referred to hereinafter as operation signal) to the control unit 51. Whereby, the control unit 51 behaves to control respective parts of the mobile proximity radiocommunication terminal 12A based on the operation signal being supplied from the input unit 52.

The communication unit 53 performs, via the network 13 based on the control of the control unit 51, transmission and reception of information to and from equipment linked to the network 13, such as the checkup information center server 14 or the application server 15 or else, for example.

The recording unit 54 is configured, for example, by a nonvolatile semiconductor memory or a hard disk or else. For example, the record unit 54 records, based on the control of the control unit 51, an event-report application received from the application server 15 via the network 13.

The mode control unit 55 controls a mode of operation of the mobile proximity radiocommunication terminal 12A. More specifically, when the downloaded event-report application is getting started at the mobile proximity radiocommunication terminal 12A for example, the mode control unit 55 causes the mode to transit to a mode for checking the vehicle 11 (called the vehicle communication mode hereinafter). Whereby, when operating in the vehicle communication mode, the mobile proximity radiocommunication terminal 12A is able to receive from a vehicle 11 that is presently faced with certain abnormality the vehicle information of such vehicle 11 and send the received vehicle information to the checkup information center server 14 via the network 13.

It is noted that the method of causing the mobile proximity radiocommunication terminal 12A to operate in the vehicle communication mode should not be limited to the above-stated process of getting the downloaded event report application started and may alternatively be replaced by other methods capable of giving a trigger for transition to the vehicle communication mode to the mobile proximity radiocommunication terminal 12A, an example of which is a method having the steps of letting the mobile proximity radiocommunication terminal 12A to prestore a table with various data and various processing tasks being listed in a one-to-one correspondence manner, and executing the processing for transition to the vehicle communication mode when acquiring certain data.

The proximity ID unit 56 is configured to include an IC tag for performing proximity communication with the on-board proximity radiocommunication terminal 21 with built-in reader/writer functionality. When becoming communicable with the on-board proximity radiocommunication terminal 21, the proximity ID unit 56 performs proximity communication using electric waves with a predetermined frequency to thereby transmit and receive information to and from the on-board proximity radiocommunication terminal 21 in a non-contact manner.

The display unit 57 is made up of a display, such as an LCD (Liquid Crystal Display), organic EL (Electro-Luminescence), LED (Light Emitting Diode) or else, and a driver which controls visual display of images or texts on the display. This display unit displays on its screen a message to the user, for example, under the control of the control unit 51.

The mobile proximity radiocommunication terminal 12B of Fig. 1 is similar in arrangement to the mobile proximity radiocommunication terminal 12A of Fig. 2 so that its explanation will be eliminated herein for avoidance of a repetitive description.

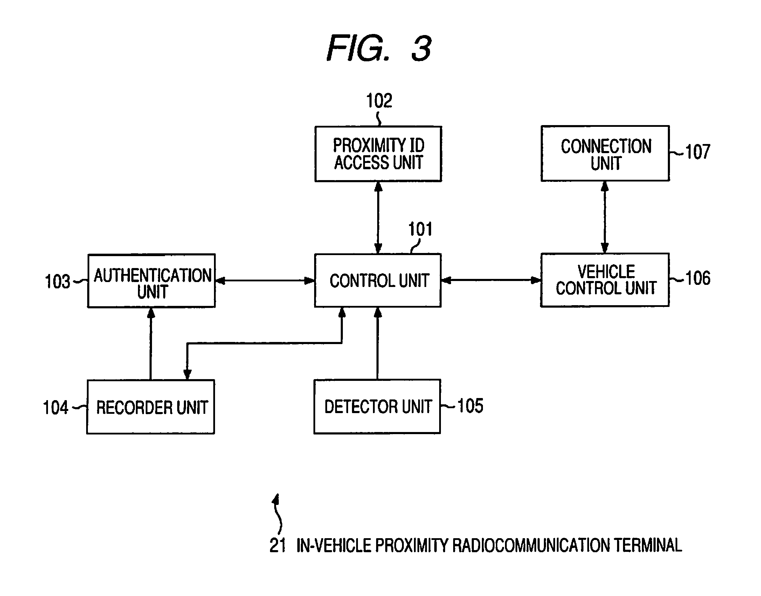

Fig. 3 is a block diagram showing a functional arrangement example of the on-board proximity radiocommunication terminal 21.

The on-board proximity radiocommunication terminal 21 is configured to include a control unit 101, proximity ID access unit 102, authentication unit 103, recording unit 104, detection unit 105, vehicle control unit 106, and connection unit 107.

The control unit 101 controls operations of respective parts of the on-board proximity radiocommunication terminal 21.

The proximity ID access unit 102 has reader/writer functionality for performing proximity communication with the built-in IC tag of the mobile proximity radiocommunication terminal 12A. When becoming communicable with the mobile proximity radiocommunication terminal 12A, the proximity ID access unit 102 performs, in a non-contact manner, transmission/reception of information to/from the mobile proximity radiocommunication terminal 12A by proximity communication using electric waves with a preselected frequency based on the control of the control unit 101.

More specifically, the proximity ID access unit 102 performs electromagnetic induction-based proximity communication using a carrier wave with a predetermined frequency between it and the mobile proximity radiocommunication terminal 12A. The frequency of the carrier wave used by the proximity ID access unit 102 may be set to a frequency of 13.56MHz in ISM (Industrial Scientific Medical) band or else. Note here that the proximity communication denotes a communication that is enabled only when the distance between a couple of communicating devices becomes within several tens of centimeters, which also includes a communication to be established while letting (housing bodies of) the communicating devices come into contact with each other.

The authentication unit 103 performs, under control of the control unit 101, authentication to determine whether the mobile proximity radiocommunication terminal 12 which attempts to perform proximity communication is the one of the true authorized person of a vehicle 11. More precisely, the authentication unit 103 performs such authentication by comparing the authentication information that is recorded at the mobile proximity radiocommunication terminal 12 being held on or over (the on-board proximity radiocommunication terminal 21 of) the vehicle 11 with the authentication information of the mobile proximity radiocommunication terminal 12B which is prestored in the on-board proximity radiocommunication terminal 21, thereby to perform authentication processing.

Here, at the authentication processing, a memory (not shown) which is internally provided in the authentication unit 103, for example, stores preregistered authentication information such as a manufacture ID of the mobile proximity radiocommunication terminal 12B owned by the authorized person of vehicle 11; and, authentication information corresponding to the authentication information, such as the manufacture ID or else, is sent from a mobile proximity radiocommunication terminal 12 which is presently in the state capable of performing proximity communication so that the authentication unit 103 compares these authentication information items, such as manufacture IDs, together to thereby determine whether the mobile proximity radiocommunication terminal 12 that becomes an object to be authenticated is identical to the mobile proximity radiocommunication terminal 12B of the authorized person of the vehicle 11-1.

More specifically, since the mobile proximity radiocommunication terminal 12B owned by the authorized person of the vehicle 11-1 is equipped with the function for causing the vehicle 11-1 to operate a smart entry function, such as unlocking the doors of vehicle 11-1 or starting its engine, for example, upon authentication by the vehicle 11-1, the on-board proximity radiocommunication terminal 21 determines whether the mobile proximity radiocommunication terminal 12 that is performing the proximity communication is the mobile proximity radiocommunication terminal 12B owned by the authorized person of vehicle 11-1. Whereby, the on-board proximity radiocommunication terminal 21 performs an operation pursuant to the mobile proximity radiocommunication terminal 12 that is performing the proximity communication, i.e., the vehicle 11-1 permits the mobile proximity radiocommunication terminal 12B owned by the authorized person of vehicle 11-1 to perform the smart entry function while at the same time sending the vehicle information to the mobile proximity radiocommunication terminal 12A owned by a third person who is not the authorized person of the vehicle 11-1 for notifying it of abnormality.

Note that the authentication information for authenticating the mobile proximity radiocommunication terminal 12 is not limited to the manufacture ID and may alternatively be replaced by any other similar suitable information enabling authentication for determining whether the mobile proximity radiocommunication terminal 12 is the one of the authorized person of a vehicle 11, such as the ID of an IC tag that is provided to the mobile proximity radiocommunication terminal 12, for example.

The record unit 104 is configured, for example, by a nonvolatile semiconductor memory or a hard disk or else. For example, the record unit 104 records the authentication information of mobile proximity radiocommunication terminal 12B. The record unit 104 may be modified to record the vehicle information in place of the vehicle information storage device 22 of Fig. 1 as stated supra.

The record unit 105 is configured, for example, by a sensor or the like for detecting a predetermined state at vehicle 11 and is responsive to detection of occurrence of abnormality at the vehicle 11, such as car stealing or else, for supplying information for notifying such abnormality (referred to hereinafter as abnormality information) to the control unit 101. Whereby, the on-board proximity radiocommunication terminal 21 detects the abnormality as occurred at the vehicle 11.

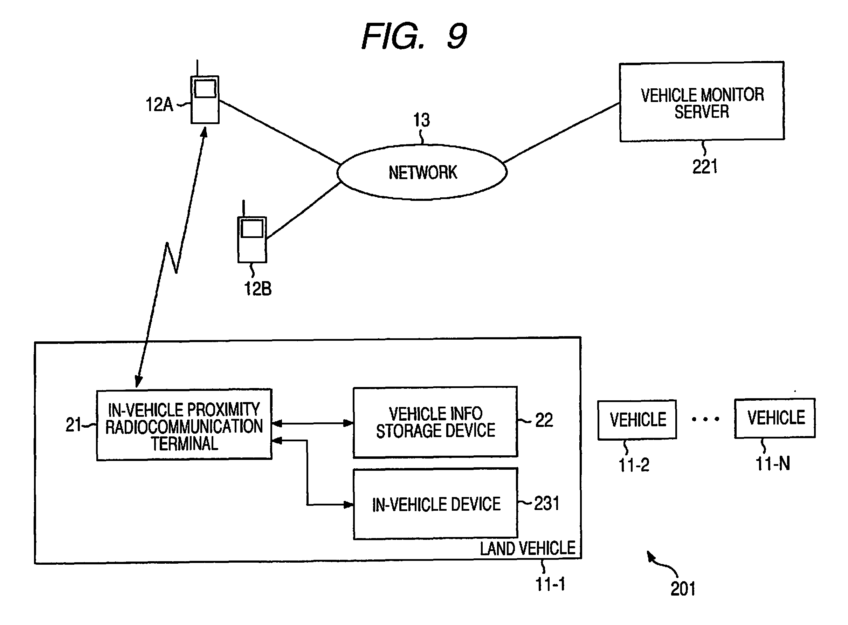

The vehicle control unit 106 controls, via the connection unit 107, various types of devices being installed in the vehicle 11, such as the vehicle information storage device 22, an on-board device 231 as will be described later with reference to Fig. 9 and others, under control of the control unit 101.

Specifically, the vehicle control unit 106 controls the vehicle information storage device 22, for example, via the connection unit 107 under control of the control unit 101 to thereby acquire the vehicle information from the vehicle information storage device 22. Additionally, for example, the vehicle control unit 106 controls various operations of the on-board device 231 of Fig. 9 via the connection unit 107 under control of the control unit 101.

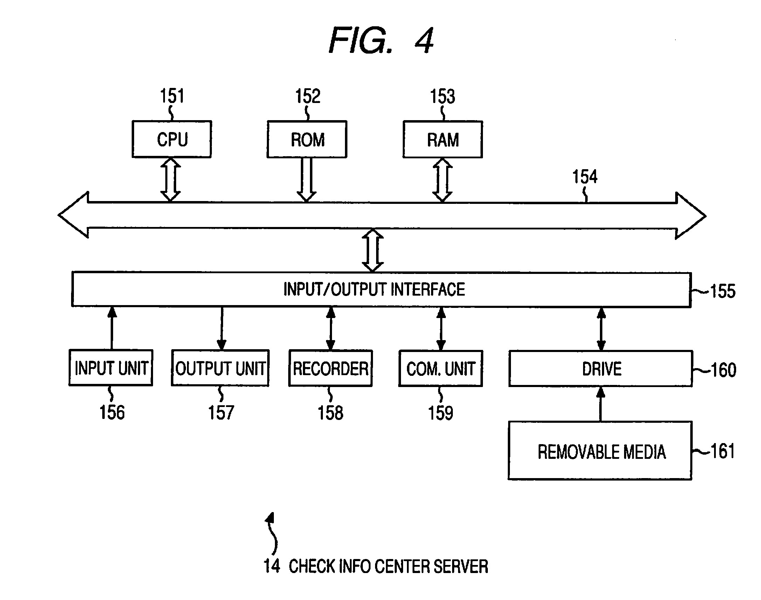

Fig. 4 is a block diagram showing an arrangement example of the checkup information center server 14.

In the checkup information center server 14 of Fig. 4, a CPU 151 executes various kinds of processing tasks in accordance with either a program being stored in a ROM 152 or a program as loaded from a recording unit 158 into a RAM (Random Access Memory) 153. The RAM 153 also stores therein data necessary for the CPU 151 to execute various tasks on a case-by-case basis.

The CPU 151, ROM 152 and RAM 153 are connected together via a bus 154. An input/output interface 155 is also connected to this bus 154.

To the input/output interface 155, an input unit 156 including a keyboard and/or a mouse, an output unit 157 comprised of a display, such as LCD, and a recording unit 158 such as a hard disk drive are connected. Also connected to the input/output interface 155 is a communication unit 159 which controls communication processing with another block via the network 13.

A drive 160 is also connected to the input/output interface 155 when the need arises, wherein the drive 160 permits loading thereinto of a removable media 161, such as a magnetic disk, optical disc, magneto-optical disk, semiconductor memory or else as occasion demands, and a computer program read out from the media is installed to the recording unit 158 according to need.

As the application server 15 of Fig. 1 and a vehicle monitor server 221 to be later described with reference to Fig. 9 are similar in configuration to the checkup information center server 14 of Fig. 4; so, explanations thereof are omitted herein to avoid repetitive description.

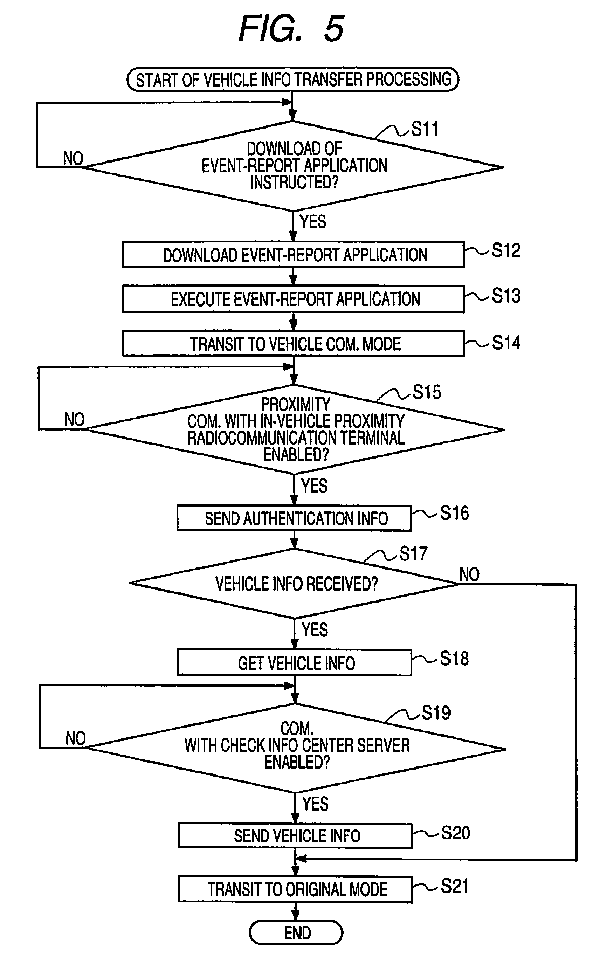

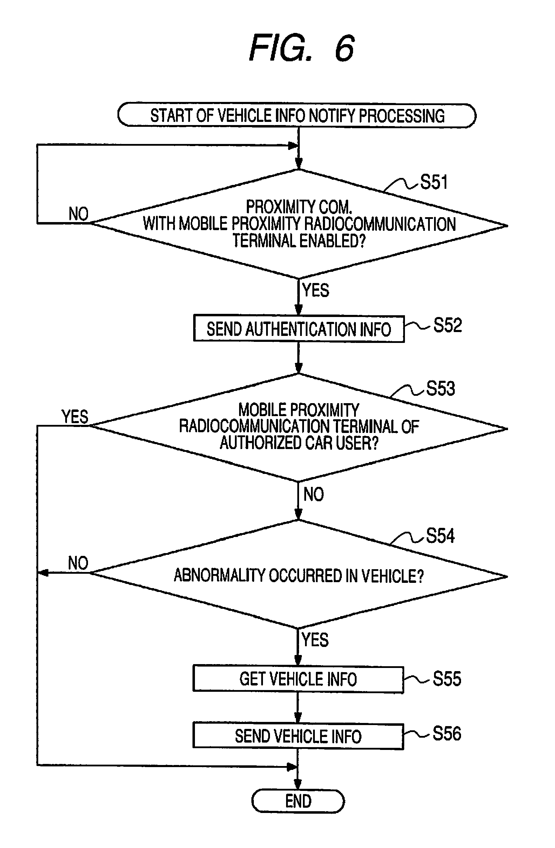

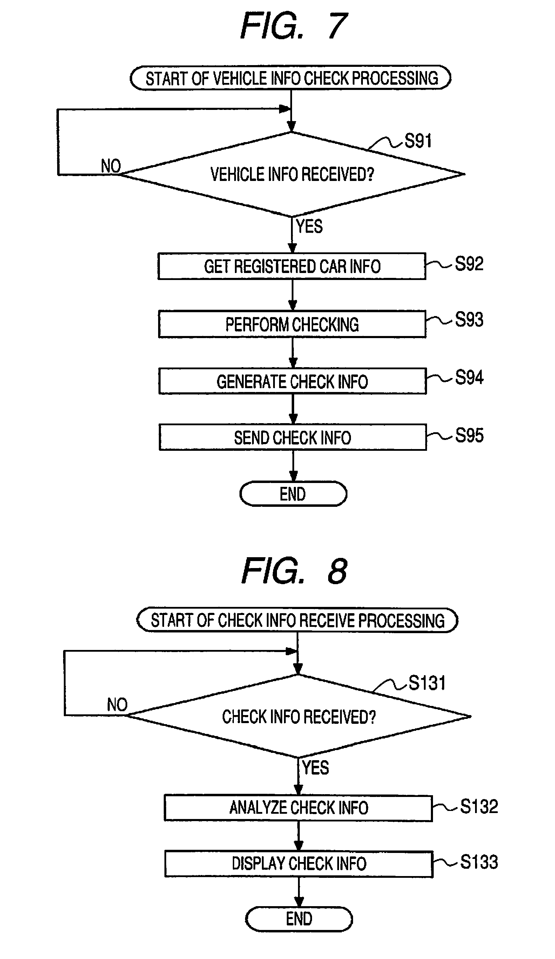

Next, an explanation will be given of operations of respective devices making up the information processing system 1 of Fig. 1 with reference to flow charts of Figs. 5 to 8. Here, an operation of the mobile proximity radiocommunication terminal 12A will first be explained with reference to the flowchart of Fig. 5; then an operation of the on-board proximity radiocommunication terminal 21 will be described with reference to the flowchart of Fig. 6; then an operation of the checkup information center server 14 will be discussed with reference to the flowchart of Fig. 7; finally, an operation of the mobile proximity radiocommunication terminal 12B will be stated with reference to the flowchart of Fig. 8.

Note here that one exemplary operation of each of the devices constituting the information processing system 1 will be explained by taking as one example an operation of each device which is as follows: in cases where a third person passes by the side of a vehicle 11-1, when the third person recognizes that these is the possibility that this vehicle 11-1 must be a stolen car, such as when any criminal action is taken against the vehicle 11-1's number plate, for example, the operation is performed in accordance with an operation of such third person. Additionally, suppose here that the third person who recognized that the vehicle 11-1 is a stolen car owns his or her mobile proximity radiocommunication terminal 12A as stated previously.

First, an explanation will be given of the processing for transferring vehicle information to be performed by the mobile proximity radiocommunication terminal 12A of Fig. 1, with reference to the flowchart of Fig. 5.

When a certain operation is instructed by the third person via the input unit 52, the control unit 51 causes each part to execute the processing of the flowchart of Fig. 5.

At a step S11, the control unit 51 determines, based on an operation signal from the input unit 52, whether an instruction to download the event-report application is issued by the third person.

At a step S11, when the download of the event-report application is not instructed by the third person, the procedure returns to the step S11 for repeated execution of the processing of step S11. More specifically, the processing of step S11 will be repeated until the download of the event-report application for stolen car notification is instructed by the third person who found the vehicle 11-1 that must be a stolen car with increased possibility and then it is decided that the download of the event-report application was instructed at step S11.

Note that the vehicle 11-1 may have the function for notifying the third person of the fact that this car is a stolen car. More precisely, in the vehicle 11-1, when its door handle is operated by a suspicious person who approached, suspicious person information is sent, causing its on-board device to detect the suspicious person. Upon detection of the suspicious person, the on-board device renders an abnormality notifying means operative to thereby inform the presence of abnormality to a third person who happens to pass by (requesting this person to notify). An example of the abnormality notifying means is a method capable of informing a third person of the occurrence of abnormality by blinking an LED provided at vehicle or by outputting either a message or abnormality-notifying sounds. Alternatively, a near-distance communication means, such as Bluetooth (registered trade mark) or the like, is employable to notify it to the mobile proximity radiocommunication terminal 12A.

On the other hand, at the step S11, when it is decided that download of the event-report application was instructed by the third person who recognized that the vehicle 11-1 must be a stolen car, the procedure goes to a step S12 which causes the communication unit 53 to download the event-report application from the application server 15 via the network 13. Whereby, the recording unit 54 records the event-report application as received from the application server 15 via the network 13 under control of the control unit 51.

At a step S13, the control unit 51 executes the event-report application thus downloaded. Precisely, the control unit 51 executes the downloaded event-report application when it is set in a prespecified state, for example, when the instruction is issued by the third person to start the event-report application downloaded, or when the download of the event-report application is completed (i.e., at this time, the event-report application stays resident in all events).

At a step S14, the mode control unit 55 causes, based on the control of the control unit 51, the mobile proximity radiocommunication terminal 12A to transit its present mode of operation to the vehicle communication mode. More precisely, in case the mobile proximity radiocommunication terminal 12A is a mobile cellular phone for example, the mode control unit 55 forces the operation mode of mobile proximity radiocommunication terminal 12A from a normal mode for performing telephone calls or data communications to the vehicle communication mode for performing communication with the vehicle 11-1.

Whereby, the mobile proximity radiocommunication terminal 12A is enabled to communicate with the on-board proximity radiocommunication terminal 21 of vehicle 11-1 by execution of the downloaded event-report application although this terminal is incapable of communicating with the on-board proximity radiocommunication terminal 21 of vehicle 11-1 if it is set in the normal mode. In other words, it becomes possible for the mobile proximity radiocommunication terminal 12A which is the terminal that has no relation with the vehicle 11-1 to perform proximity communication with (the on-board proximity radiocommunication terminal 21 of) the vehicle 11-1 after having transited to a prespecified state by downloading of the event-report application.

At a step S15, the control unit 51 monitors a present state of the proximity ID unit 56 to thereby determine whether it is in the state capable of performing proximity communication with the on-board proximity radiocommunication terminal 21.

At the step S15, when it is decided that it is impossible to perform the proximity communication with the on-board proximity radiocommunication terminal 21, the mobile proximity radiocommunication terminal 12A and the on-board proximity radiocommunication terminal 21 are incapable of performing communications due to their positional relationship; so, the routine returns to the step S15, followed by repeated execution of the processing of the step S15. In other words, the process of step S15 will be repeated until it is decided at the step S15 that it is possible to perform the proximity communication with the on-board proximity radiocommunication terminal 21 since the proximity communication between the mobile proximity radiocommunication terminal 12A and on-board proximity radiocommunication terminal 21 becomes enabled after the mobile proximity radiocommunication terminal 12A is held "shaded" on (the on-board proximity radiocommunication terminal 21 of) the vehicle 11-1 by the third person who owns the mobile proximity radiocommunication terminal 12A, for example.

On the other hand, at the step S15, when it is decided that it is possible to perform proximity communication with the on-board proximity radiocommunication terminal 21, the routine goes to a step S16 which causes the proximity ID unit 56 to send, based on control of the control unit 51, the authentication information to the on-board proximity radiocommunication terminal 21 by such proximity communication.

Here, the authentication information is an ID code for uniquely identifying the mobile proximity radiocommunication terminal 12. Concretely, the authentication information is the one that enables authentication to determine whether the mobile proximity radiocommunication terminal 12 is the terminal which is owned by the authorized person of vehicle 11, such as the manufacture ID of mobile proximity radiocommunication terminal 12, ID of an IC tag provided at the mobile proximity radiocommunication terminal 12, etc.

At a step S17, the control unit 51 monitors a present state of the proximity ID unit 56 to thereby decide whether the vehicle information as sent from the on-board proximity radiocommunication terminal 21 is received or not.

At the step S17, when it is decided that the vehicle information being sent from the on-board proximity radiocommunication terminal 21 is received, the routine goes to a step S18 which causes the control unit 51 to acquire, by proximity communication, the vehicle information as sent from the on-board proximity radiocommunication terminal 21, i.e., the vehicle information to be supplied from the proximity ID unit 56. Whereby, the mobile proximity radiocommunication terminal 12A has obtained the vehicle information of the vehicle 11-1 from the on-board proximity radiocommunication terminal 21.

At this time, the control unit 51 may be configured to record the acquired vehicle information in the recorder unit 54. Specifically, in case the mobile proximity radiocommunication terminal 12A is unable to perform communication with the checkup information center server 14 due to the fact that an electrical wave state is bad, for example, the vehicle information is recorded in the recorder unit 54; thus, it becomes possible to send the recorded vehicle information to the checkup information center server 14 after the electric wave state becomes better. Whereby, the mobile proximity radiocommunication terminal 12A is able to send more reliably the vehicle information to the checkup information center server 14 via the network 13.

Optionally, at the mobile proximity radiocommunication terminal 12A, the vehicle information acquired may be displayed by the display unit 57.

At a step S19, the control unit 51 monitors a present state of the communication unit 53 to thereby determine whether it is in the state capable of communicating with the checkup information center server 14 via the network 13.

At the step S19, when it is decided that it is impossible to perform communication with the checkup information center server 14, it is impossible to perform communication between the mobile proximity radiocommunication terminal 12A and the checkup information center server 14 due to the fact that the electric wave state is bad; so, the routine returns to the step S19 which repeats the processing of step S19. In other words, the process of step S19 will be repeated until it is decided that it is possible to perform communication with the checkup information center server 14 since the communication between the mobile proximity radiocommunication terminal 12A and the checkup information center server 14 becomes enabled after the electric wave state becomes better owing to the fact that the user who owns the mobile proximity radiocommunication terminal 12A moves to another land location, for example.

On the other hand, when it is decided that it is possible to perform communication with the checkup information center server 14, the routine goes to a step S20 which causes the communication unit 53 to send the vehicle information that was received from the on-board proximity radiocommunication terminal 21, i.e., the vehicle information as supplied from the control unit 51, to the checkup information center server 14 via the network 13 under control of the control unit 51. Whereby, the mobile proximity radiocommunication terminal 12A transmits the vehicle information of vehicle 11-1 as acquired from the on-board proximity radiocommunication terminal 21 to the checkup information center server 14 via the network 13.

At the step S21, the mode control unit 55 transits a present operation mode of the mobile proximity radiocommunication terminal 12A from the vehicle communication mode to the original mode under control of the control unit 51 and then completes the vehicle information transfer processing being executed by the mobile proximity radiocommunication terminal 12A of Fig. 1. Practically, when the mobile proximity radiocommunication terminal 12A is a mobile phone for example, the mode control unit 55 changes the operation mode of mobile proximity radiocommunication terminal 12A from the vehicle communication mode for communication with the vehicle 11-1 to the normal mode for performing telephone calls or data communications. Whereby, the mobile proximity radiocommunication terminal 12A has returned to its state incapable of performing communication with the on-board proximity radiocommunication terminal 21 of vehicle 11-1, i.e., the state prior to getting the downloaded event-report application started.

Additionally, in this embodiment, an arrangement may be employed for paying a certain price to the third person who has reported the presence of a stolen car. More specifically, when the event-report application is downloaded, the third person is prompted to register in advance his or her own bank account, thereby enabling the certain price to be transferred to this account from the authorized person of vehicle 11-1 or the security company after the case of such car theft was solved.

On the other hand, at the step S17, in case it is decided that no vehicle information is received from the on-board proximity radiocommunication terminal 21, e.g., when no abnormality occurs at the vehicle 11-1, no vehicle information is sent from the on-board proximity radiocommunication terminal 21 because there is no need to report any abnormality occurred at the vehicle 11-1; thus, the processes of the steps S18 to S20 are skipped to proceed to the step S21 which causes the mode control unit 55 to transit the operation mode of mobile proximity radiocommunication terminal 12A from the vehicle communication mode to the original mode under control of the control unit 51, followed by termination of the vehicle information transfer processing by the mobile proximity radiocommunication terminal 12A of Fig. 1.

In the way stated above, the mobile proximity radiocommunication terminal 12A changes its state to the state capable of performing proximity communication with the on-board proximity radiocommunication terminal 21 while letting a specific operation, such as downloading the event-report application, be a trigger therefor.

Next, an explanation will be given of vehicle information notifying processing to be performed by the on-board proximity radiocommunication terminal 21 of Fig. 1 with reference to the flowchart of Fig. 6.

At a step S51, the control unit 101 monitors a present state of the proximity ID access unit 102 to thereby determine whether it is in the state capable of performing proximity communication with the mobile proximity radiocommunication terminal 12.

At the step 51, if it is determined that it is impossible to perform proximity communication with the mobile proximity radiocommunication terminal 12, these are unable to perform proximity communication with each other due to positional relationship therebetween for example, the procedure returns to the step S51, followed by repeated execution of the processing of step S51. In other words, the process of step S51 will be repeated until the intended proximity communication becomes enabled after the mobile proximity radiocommunication terminal 12A is held on (the on-board proximity radiocommunication terminal 21 of) the vehicle 11-1 by a third person who owns the mobile proximity radiocommunication terminal 12A, for example, resulting in a decision being made to conclude that it is possible to perform proximity communication with the mobile proximity radiocommunication terminal 12.

On the other hand, at the step S51, when it is decided that it is possible to perform proximity communication with the mobile proximity radiocommunication terminal 12, the procedure goes to a step S52 which causes the proximity ID access unit 102 to receive by such proximity communication the authentication information that is to be sent from the mobile proximity radiocommunication terminal 12A based on control of the control unit 101.

At a step S53, the authentication unit 103 determines, based on the received authentication information, whether the mobile proximity radiocommunication terminal 12 being presently set in the proximity communication enabled state is the mobile proximity radiocommunication terminal 12B which is owned by the authorized person of the vehicle 11-1. More specifically, the authentication unit 103 performs authentication processing by comparing the authentication information to be acquired from the mobile proximity radiocommunication terminal 12 to the authentication information of the mobile proximity radiocommunication terminal 12B that is prerecorded in the recorder unit 104, for example.

At the step S53, when it is determined that the mobile proximity radiocommunication terminal 12 being held on the vehicle 11-1 is not the mobile proximity radiocommunication terminal 12B which is owned by the authorized person of the vehicle 11-1, the mobile proximity radiocommunication terminal 12 being set in the proximity communication capable state is the mobile proximity radiocommunication terminal 12A that is owned by the third person who recognized that the vehicle 11-1 is a stolen car; so, at a step S54, the control unit 101 determines based on abnormality information to be supplied from the control unit 105 whether abnormality, such as theft, is occurred at the vehicle 11-1.

At a step S54, when it is decided that the abnormality occurs at the vehicle 11-1, the routine proceeds to a step S55 which causes the vehicle control unit 106 to control the vehicle information storage device 22 of such vehicle 11-1 through the connection unit 107 based on control of the control unit 101 to thereby acquire the vehicle information of vehicle 11-1.

At a step S56, the proximity ID access unit 102 sends, by proximity communication under control of the control unit 101, the vehicle information of the vehicle 11-1 obtained from the vehicle information storage device 22, i.e., the vehicle information to be supplied from the control unit 101, to the mobile proximity radiocommunication terminal 12A; then, the vehicle information reporting processing to be performed by the on-board proximity radiocommunication terminal 21 is terminated. Whereby, the on-board proximity radiocommunication terminal 21 is expected to transmit the vehicle information of vehicle 11-1 to the mobile proximity radiocommunication terminal 12A. Note that at this time, the proximity ID access unit 102 is also capable of sending abnormality information from the detector unit 105 along with the vehicle information to the mobile proximity radiocommunication terminal 12A by proximity communication under control of the control unit 101 to thereby inform the contents (e.g., theft or else) of the abnormality being occurred at the vehicle 11-1.

At the step S53, when it is decided that the mobile proximity radiocommunication terminal 12 which is in the proximity communication capable state is the mobile proximity radiocommunication terminal 12B owned by the authorized person of the vehicle 11-1, i.e., it is not the mobile proximity radiocommunication terminal 12A, if the terminal is the mobile proximity radiocommunication terminal 12B of the authorized person of vehicle 11-1, it is unnecessary to inform the checkup information center server 14 because this vehicle is his or her own car; thus, the processes of the steps S54 to S56 are skipped, followed by termination of the vehicle information report processing to be performed by the on-board proximity radiocommunication terminal 21 of Fig. 1. Similarly, at the step S54, when it is decided that the vehicle 11-1 has no abnormality also, for example, it is unnecessary to inform the checkup information center server 14 because this vehicle is faced with no abnormality so that the processes of the steps S55 and S56 are skipped, followed by termination of the vehicle information informing processing to be performed by the on-board proximity radiocommunication terminal 21 of Fig. 1.

As stated above, the on-board proximity radiocommunication terminal 21 sends the vehicle information by proximity communication in response to receipt of a request from the mobile proximity radiocommunication terminal 12A owned by a third person, which is set in a predetermined state.

Note here that although in the flowchart of Fig. 6 the explanation was given of one specific case where the vehicle information is sent by proximity communication to the mobile proximity radiocommunication terminal 12A owned by a third person who has no relationship with the authorized person of the vehicle 11-1 when this mobile proximity radiocommunication terminal 12A is held over at the step S53, it may obviously be configured so that the vehicle information is sent by proximity communication to such the mobile proximity radiocommunication terminal 12B when the mobile proximity radiocommunication terminal 12B is shaped which is owned by the authorized person of the vehicle 11-1. Whereby, when abnormality occurs at the vehicle, for example, this abnormality is also notified to the mobile proximity radiocommunication terminal 12B of the authorized person of the vehicle.

An explanation will next be given of vehicle information checking processing to be performed by the checkup information center server 14 of Fig. 1 with reference to the flowchart of Fig. 7.

At a step S91, the CPU 151 monitors a present state of the communication unit 159 to thereby determine whether vehicle information is received from the mobile proximity radiocommunication terminal 12A via the network 13.

At the step S91, when it is determined that such vehicle information is not received from the mobile proximity radiocommunication terminal 12A, the procedure returns to the step S91 for repeated execution of the processing of step S91. In other words, the process of step S91 will be repeated until it is decided that the vehicle information is actually received at the step S91 due to the fact that the mobile proximity radiocommunication terminal 12A acquires the vehicle information from the on-board proximity radiocommunication terminal 21 installed in the vehicle 11-1, followed by transmission of such vehicle information to the checkup information center server 14 via the network 13, resulting the checkup information center server 14 receiving the vehicle information.

On the other hand, at the step S91, when it is decided that the vehicle information is received from the mobile proximity radiocommunication terminal 12A, the procedure goes to a step S92 which causes the CPU 151 to acquire registered vehicle information as has been prestored in the recorder unit 158.

At a step S93, the CPU 151 performs checkup processing for checking the vehicle information as received from the mobile proximity radiocommunication terminal 12A via the network 13 and the registered vehicle information thus acquired. More specifically, the CPU 151 performs the processing for checking whether the vehicle information as sent from the mobile proximity radiocommunication terminal 12A has been registered as the registered vehicle information, for example.

Note that the checkup information center server 14 is managed by a business entity for providing services relating to the security of vehicles or a police department or the like for example, the registered vehicle information becomes the information prestored by such business party or else. In other words, for example, the authorized person of the vehicle 11-1 lets his or her vehicle 11-1 be subscribed to the service relating to the vehicle security to be provided by the business entity whereas the registered vehicle information concerning such vehicle 11-1 is prestored in the checkup information center server 14.

At a step S94, the CPU 151 generates information indicative of a checking result (referred to hereinafter as checkup information) based on the check processing result. Practically, when the check result indicates that the vehicle information of the vehicle 11-1 has already been registered as the registered vehicle information, the CPU 151 specifies the authorized person of the vehicle 11-1, generates checkup information indicating that abnormality occurs at such vehicle 11-1 belonging to the authorized person, and supplies the generated checkup information to the communication unit 159.

At a step S95, the communication unit 159 sends the checkup information being sent from the CPU 151 to the mobile proximity radiocommunication terminal 12B via the network 13 under control of the control unit 151; then, the vehicle information checking processing to be performed by the checkup information center server 14 of Fig. 1 is ended.

Note here that the checkup information to be generated by the processing of step S94 and being sent by the processing of step S95 is generated as a form of information that becomes enabled to be sent to a specific user, such as an E-mail or the like, for example. More specifically, the checkup information center server 14 sends the checkup information indicative of the abnormality of vehicle 11-1 to the mobile proximity radiocommunication terminal 12B owned by the authorized person of the vehicle 11-1 as an E-mail via the network 13.

In the way stated above, the checkup information center server 14 checks the vehicle information to be sent from the mobile proximity radiocommunication terminal 12A, generates the checkup information, and sends the generated checkup information to the mobile proximity radiocommunication terminal 12B.

An explanation will next be given of checkup information receiving processing to be performed by the mobile proximity radiocommunication terminal 12B of Fig. 1 with reference to the flowchart of Fig. 8.

At a step S131, the control unit 51 monitors a present state of the communication unit 53 to determine whether the checkup information to be sent from the checkup information center server 14 is received via the network 13.

At the step S131, when the checkup information is not received, no abnormality occurs at the vehicle 11-1 for example so that no checkup information is sent therefrom; thus, the procedure returns to the step S131 for repeated execution of the processing of step S131. More precisely, when the vehicle 11-1 is stolen, for example, a third person who found it and who has his or her mobile proximity radiocommunication terminal 12A performs a prespecified operation to inform this fact to the checkup information center server 14 whereby the checkup information is sent from the checkup information center server 14 via the network 13 so that the processing of the step S131 is repeated until it is determined that the checkup information is received.

On the contrary, at the step S131, when it is decided that the checkup information is received, the procedure goes to a step S132, which causes the control unit 51 analyzes the checkup information as received from the checkup information center server 14 via the network 13, i.e., the checkup information to be supplied from the communication unit 53.

At a step S133, the control unit 51 causes, based on an analysis result, information concerning the status of the vehicle 11-1 to be displayed on the screen of the display unit 57 and then completes the checkup information reception processing to be done by the mobile proximity radiocommunication terminal 12B of Fig. 1. Practically, the control unit 51 is responsive to receipt of the analysis result for causing the display unit 57 to display on its screen a message indicating that the vehicle 11-1 has been stolen, such as "Your car is stolen, " as the body text of an E-mail. Whereby, the authorized person of the vehicle 11-1 affirms the message of the mobile proximity radiocommunication terminal 12B to recognize that his or her car is encountered with the injury of theft.

In the way stated above, the mobile proximity radiocommunication terminal 12B displays the checkup information as received from the checkup information center server 14 via the network 13.

In this way, the mobile proximity radiocommunication terminal 12A downloads an event-report application and executes this event-report application, thereby making it possible to acquire the vehicle information from the vehicle 11-1 after having performed mode transition to the vehicle communication mode. In other words, it becomes possible for the mobile proximity radiocommunication terminal 12A having no relationship with the vehicle 11-1 to execute the event-report application to thereby perform proximity communication with the vehicle 11-1 and then get the vehicle information from the vehicle 11-1.

In addition, since it is possible, when specifying the vehicle 11-1 which is a stolen car, to obtain the information concerning the vehicle 11-1 merely by holding the mobile proximity radiocommunication terminal 12A that is operating in the vehicle communication mode on or over the on-board proximity radiocommunication terminal 21, it is no longer necessary for a manager on the vehicle 11-1 checking side to examine the car license number and/or registered car type or else from a vehicle inspection certificate in order to perform checking; thus, it is possible to prevent an ability to specify the vehicle 11-1 from being lost by human errors. Furthermore, the manager who is responsible in checking of the vehicle 11-1 is no longer required to examine the information as to the vehicle 11-1. This makes it possible to perform operations relating to the checkup processing more easily and more rapidly.

Incidentally, regarding the method for forcing the mobile proximity radiocommunication terminal 12A to transit into the vehicle communication mode, this is not exclusively limited to the method of executing the event-report application and may alternatively be replaced by any available methods capable of forcing the mobile proximity radiocommunication terminal 12A to go into the vehicle communication mode.

Concretely, for example, an arrangement is employable for letting the mode of mobile proximity radiocommunication terminal 12A change into the vehicle communication mode in response to receipt of an instruction from the mobile proximity radiocommunication terminal 12B owned by the authorized person of a vehicle 11. Accordingly, an explanation will be given, with reference to Figs. 9 to 13, of an example of the arrangement of information processing system for allowing the mobile proximity radiocommunication terminal 12A to perform mode transition into the vehicle communication mode based on the instruction from the mobile proximity radiocommunication terminal 12B to thereby perform proximity communication with the on-board proximity radiocommunication terminal 21 of the vehicle 11-1.

Fig. 9 is a block diagram showing another embodiment of the information processing system incorporating the principles of this invention.

An information processing system 201 is configured to include a mobile proximity radiocommunication terminal 12A, mobile proximity radiocommunication terminal 12B, vehicles 11-1 to 11-N, and vehicle monitor server 221. Note that parts or components corresponding to those of Fig. 1 are added the same reference numerals, with explanations of processing-identical parts are eliminated herein for brevity purposes of the description. The information processing system 201 is different from the information processing system 1 of Fig. 1 in that the vehicle monitor server 221 is provided in place of the checkup information center server 14 and the application server 15.

More specifically, in the information processing system 201, a respective one of the vehicles 11-1 to 11-N performs wireless proximity communication with the mobile proximity radiocommunication terminal 12A by use of electrical waves having a predefined frequency in a similar way to the system shown in Fig. 1. The mobile proximity radiocommunication terminal 12A, mobile proximity radiocommunication terminal 12B and vehicle monitor server 221 are connected together via a network 13, such as the Internet, for example.

An on-board proximity radiocommunication terminal 21 and vehicle information storage device 22 plus on-board device 231 are provided for a respective one of the vehicles 11-1 to 11-N, such as various types of automobiles, two-wheeled vehicles and others. In other words, the vehicles 11-1 to 11-N of Fig. 9 are different from those of Fig. 1 in that the on-board device 231 is added to each of the vehicles of Fig. 9. The on-board proximity radiocommunication terminal 21, vehicle information storage device 22 and on-board device 231 are linked together via an on-board LAN, such as CAN, for example.

Note that although in the example of Fig. 9 the on-board proximity radiocommunication terminal 21, vehicle information storage device 22 and on-board device 231 are represented only in the vehicle 11-1 in order to simplify the explanation, the reality is that each of the vehicles 11-1 to 11-N is configured to include the on-board proximity radiocommunication terminal 21, vehicle information storage device 22 and on-board device 231 in a similar manner to the vehicle 11-1.

The on-board device 231 is a device which is provided in a vehicle 11 to control operations of the vehicle 11 and also afford various kinds of functions to a driver and/or passengers. The on-board device 231 performs various operations based on control of the on-board proximity radiocommunication terminal 21. Practically, the on-board device 231 is made up of an engine control device, power steering device, transmission control device, navigation device, air conditioner, audio player and others.

The vehicle monitor server 221 is constituted, for example, from a dedicated server to be managed by a business party (e.g., security company) that provides certain services by using the information processing system 201, for performing prespecified processing tasks in order to monitor the vehicles 11 involved. More specifically, the vehicle monitor server 221 causes (the on-board proximity radiocommunication terminal 21 of) the vehicle 11-1 to receive a request for the vehicle 11-1, which is sent from the mobile proximity radiocommunication terminal 12B owned by an authorized person of the vehicle 11-1 via the mobile proximity radiocommunication terminal 12A, thereby allowing the vehicle 11-1 to execute an operation corresponding to the request.

Although in Fig. 9 one specific example is shown which is configured to provide one-by-one the mobile proximity radiocommunication terminal 12A, mobile proximity radiocommunication terminal 12B, network 13 and vehicle monitor server 221 in order to simplify the explanation, it is also possible to provide two or more units for each device in a similar manner to Fig. 1.

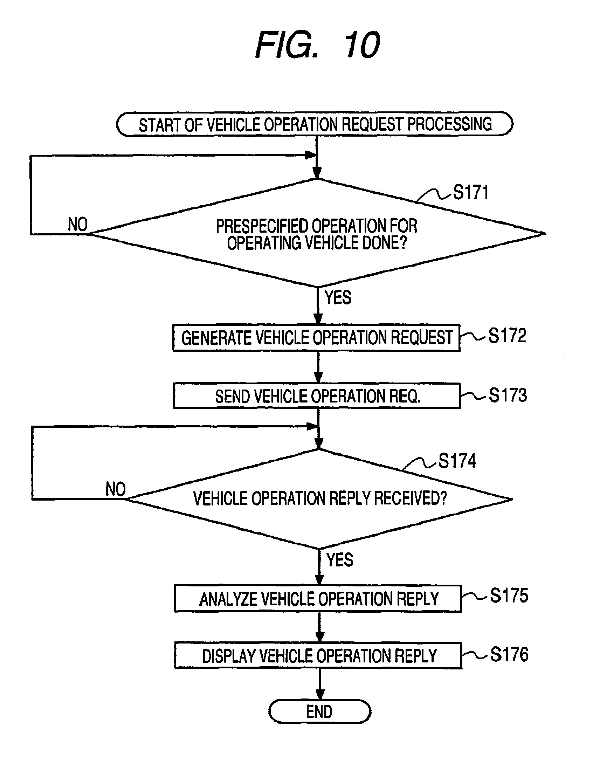

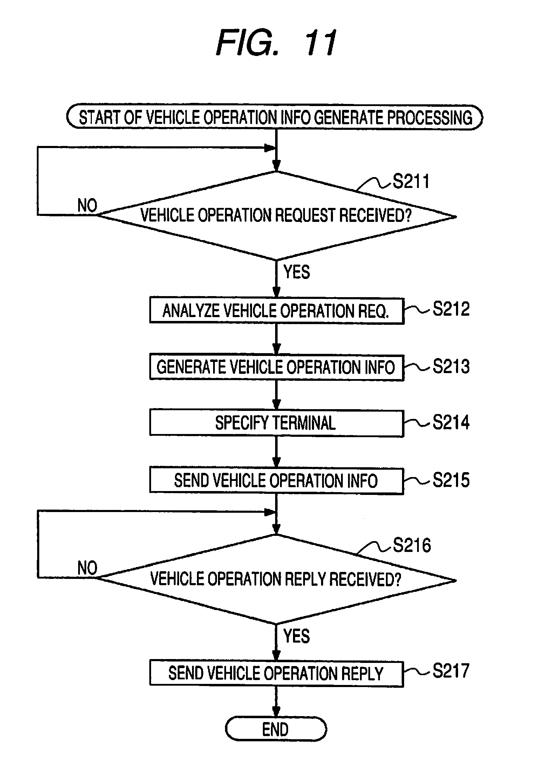

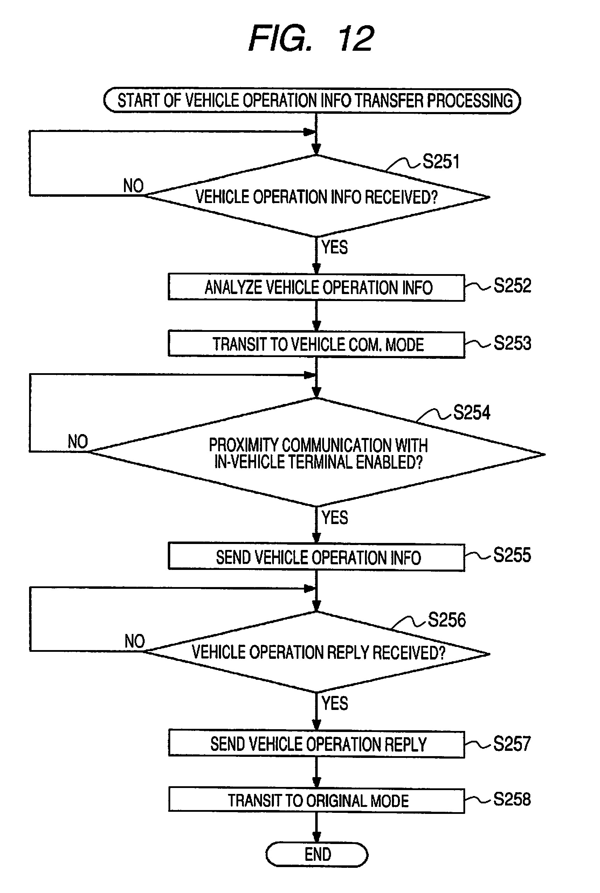

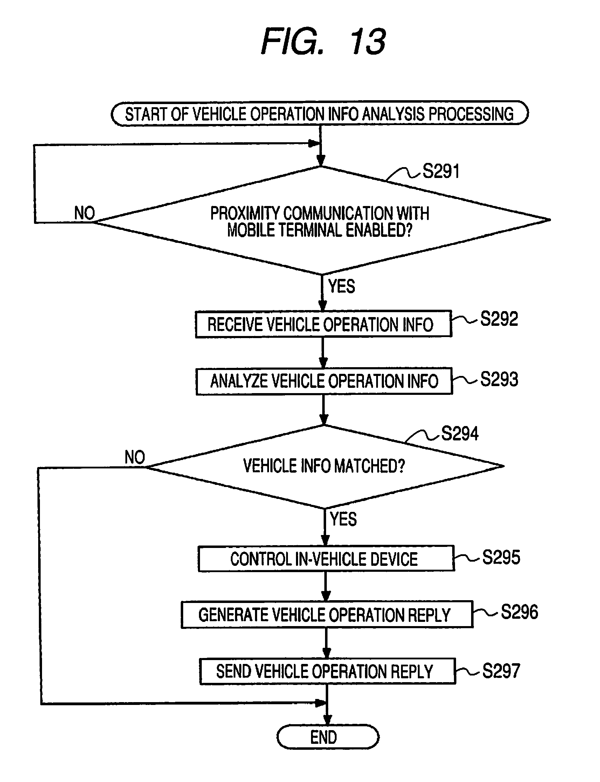

Next, operations of respective devices constituting the information processing system 201 of Fig. 9 will be explained with reference to flowcharts of Figs. 10 to 13. Firstly, here, an operation of the mobile proximity radiocommunication terminal 12B will be explained with reference to the flowchart of Fig. 10; then, an operation of the vehicle monitor server 221 will be explained with reference to the flowchart of Fig. 11; then, an operation of the mobile proximity radiocommunication terminal 12A will be explained with reference to the flowchart of Fig. 12; finally, an operation of the on-board proximity radiocommunication terminal 21 will be explained with reference to the flowchart of Fig. 13.

Note here that as one example of the operation of each of the devices making up the information processing system 201, an exemplary operation of each device will be explained, which is performed in accordance with a manual operation of an authorized person of a vehicle 11-1 when the authorized person performs a specific operation, such as stopping the vehicle 11-1's engine because his or her own vehicle 11-1 was stolen, for example.

An explanation will first be given of vehicle operation state request transmission processing to be performed by the mobile proximity radiocommunication terminal 12B of Fig. 9 with reference to the flowchart of Fig. 10.

When a prespecified operation is instructed by the authorized person of the vehicle 11-1 via an input unit 52, a control unit 51 causes each part to execute the processing of the flowchart of Fig. 10.

At a step S171, the control unit 51 determines, based on an operation signal from the input unit 52, whether the prespecified operation for rendering the vehicle 11-1 operative is made by the authorized person of the vehicle 11-1.

At the step S171, when it is determined that the prespecified operation for operating the vehicle 11-1 is not performed, the procedure returns to the step S171 for repeated execution of the processing of step S171. More specifically, the processing of step S171 will be repeated until it is decided that the prespecified operation for operating the vehicle 11-1 is performed at the step S171 after the authorized person of the vehicle 11-1 performed the prespecified operation against the vehicle 11-1 in order to instruct his or her desired operation, such as stopping the car engine.

On the other hand, at the step S171, when it is determined that the prespecified operation for operating the vehicle 11-1 is performed, the procedure goes to a step S172, which causes the control unit 51 to generate a request for the prespecified operation (referred to as the vehicle operation request hereinafter) against the vehicle 11-1 based on the operation signal from the input unit 52 and then supply the generated vehicle operation request to a communication unit 53. Precisely, when the prespecified operation for stopping the engine of vehicle 11-1 is issued from the authorized person of the vehicle 11-1, the control unit 51 generates a vehicle operation request corresponding to such operation.

Suppose that the vehicle operation request contains therein at least vehicle information for identification of vehicle 11 and information concerning a command for letting the vehicle 11 perform a prespecified operation.

At a step S173, the communication unit 53 sends the vehicle operation request to the vehicle monitor server 221 via the network 13 under control of the control unit 51. Whereby, the mobile proximity radiocommunication terminal 12B transmits the vehicle operation request pursuant to the operation of the authorized person of vehicle 11-1 to the vehicle monitor server 221 via the network 13.

At a step S174, the control unit 51 monitors a present state of the communication unit 53 to determine whether a reply to the prespecified operation based on the vehicle operation request (referred to hereinafter as vehicle operation reply) due to the vehicle 11-1 is received from the vehicle monitor server 221 via the network 13.

At the step S174, when the vehicle operation reply is not yet received from the vehicle monitor server 221, the routine returns to the step S174 for repeated execution of the processing of step S174. More specifically, the processing of step S174 will be repeated until it is decided that the vehicle operation reply is received at the step S174 since the mobile proximity radiocommunication terminal 12B received such vehicle operation reply via the mobile proximity radiocommunication terminal 12A and network 13 plus vehicle monitor server 221 due to the fact that the vehicle 11-1 transmitted the vehicle operation reply after having performed a predetermined operation in accordance with the prespecified operation requested by the authorized person of the vehicle 11-1.

On the contrary, at the step S174, when it is decided that the vehicle operation reply is received from the vehicle monitor server 221, the routine goes to a step S175 which causes the control unit 51 to analyze the vehicle operation reply as received from the vehicle monitor server 221 via the network 13, i.e., the vehicle operation reply to be supplied from the communication unit 53.

At a step S176, the control unit 51 causes information concerning a result of operation of the vehicle 11-1 to be displayed on the screen of a display unit 57 based on the analysis result, followed by termination of the vehicle operation request transmission processing to be performed by the mobile proximity radiocommunication terminal 12B of Fig. 9. Precisely, the control unit 51 causes the display unit 57 to display on its screen a message indicative of the operation result of vehicle 11-1, such as an E-mail text saying "Engine is stopped successfully." Whereby, the authorized person of the vehicle 11-1 affirms the message of the mobile proximity radiocommunication terminal 12B to thereby recognize a present operation situation of his or her car.

In the above-stated way, the mobile proximity radiocommunication terminal 12B sends the vehicle operation request to the vehicle monitor server 221 via the network 13.

An explanation will next be given of vehicle operation information generation processing to be done by the vehicle monitor server 221 of Fig. 9 with reference to the flowchart of Fig. 11.

At a step S211, the CPU 151 monitors a present state of communication unit 159 to thereby determine whether the vehicle operation request is received from the mobile proximity radiocommunication terminal 12B via the network 13.

At the step S211, when it is determined that the vehicle operation request is not received from the mobile proximity radiocommunication terminal 12B, the routine returns to the step S211 for repeated execution of the processing of step S211. More specifically, the processing of step S211 will be repeated until it is decided that the vehicle operation request is received at step S211 since the vehicle operation request is sent from the mobile proximity radiocommunication terminal 12B in accordance with the operation of the mobile proximity radiocommunication terminal 12B due to the authorized person of the vehicle 11-1 whereby the vehicle monitor server 221 receives such vehicle operation request via the network 13.

On the other hand, at the step S211, when it is decided that the vehicle operation request is received from the mobile proximity radiocommunication terminal 12B, the routine goes to a step S212 which permits the CPU 151 to analyze the vehicle operation request that was received from the mobile proximity radiocommunication terminal 12B via the network 13, i.e., the vehicle operation request to be supplied from the communication unit 159.

At a step S213, the CPU 151 generates, based on a result of analysis, information for causing the vehicle 11-1 to perform a predetermined operation pursuant to the vehicle operation request (referred to hereinafter as vehicle operation information). More specifically, the CPU 151 generates such vehicle operation information for forcing the vehicle 11-1 to stop its engine based on vehicle information of the vehicle 11-1 to be included in the vehicle operation request as received from the mobile proximity radiocommunication terminal 12B and information concerning a command for causing the vehicle 11-1 to perform the prespecified operation, such as stopping the engine, for example. The vehicle operation information is generated, for example, as an application program for providing vehicle operation information (this application program will be called the event-report application because the above-noted event-report application may be provided with a function of providing the vehicle operation information).

At a step S214, the CPU 151 performs terminal specifying processing for specifying a destination terminal of the vehicle operation information based on the analysis result. Practically, the CPU 151 specifies, based on the analysis result, a terminal that is the nearest to the vehicle 11-1 from among those mobile proximity radiocommunication terminals 12A owned by a plurality of third persons by utilizing a position information reporting function using GPS (Global Positioning System) as equipped to the mobile proximity radiocommunication terminals 12A and a position information notifying function equipped to the on-board device installed in the vehicle 11-1, for example. More precisely, the vehicle monitor server 221 is the server that is managed by a predetermined service-providing business party; so, an example is that a terminal owned by a person who is the nearest to the vehicle 11-1 is specified, by the terminal-specifying processing, from among the plurality of terminals which are registered in advance to certain service.

At a step S215, the CPU 151 sends the generated vehicle operation information to such specified mobile proximity radiocommunication terminal 12A via the network 13.

At a step S216, the CPU 151 monitors a present state of the communication unit 159 to determine whether the vehicle operation reply is received from the mobile proximity radiocommunication terminal 12A via the network 13.

At the step S216, when it is determined that the vehicle operation reply is not received from the mobile proximity radiocommunication terminal 12A, the routine returns to the step S216 for repeated execution of the above-stated processing. More specifically, the processing of the step S216 will be repeated until it is decided that the vehicle operation reply is received at the step S216 because of the fact that the vehicle 11-1 performs a prespecified operation based on the vehicle operation information whereby the vehicle operation reply is sent from the mobile proximity radiocommunication terminal 12A so that the vehicle monitor server 221 receives the vehicle operation reply via the network 13.

On the contrary, at the step S216, when it is decided that the vehicle operation reply is received from the mobile proximity radiocommunication terminal 12A, the routine proceeds to a step S217, which causes the communication unit 159 to send the vehicle operation reply received from mobile proximity radiocommunication terminal 12A toward the mobile proximity radiocommunication terminal 12B under control of the CPU 151, followed by completion of the vehicle operation information generating processing to be performed by the vehicle monitor server 221 of Fig. 9.

As stated above, the vehicle monitor server 221 generates the vehicle operation information based on the vehicle operation request to be sent from mobile proximity radiocommunication terminal 12B and then transmits such vehicle operation information to a specific mobile proximity radiocommunication terminal 12A via the network 13.

An explanation will next be given of vehicle operation information transfer processing to be performed by the mobile proximity radiocommunication terminal 12A of Fig. 9 with reference to the flowchart of Fig. 12.

At a step S251, the control unit 51 monitors a present state of the communication unit 53 to determine whether the vehicle operation information to be sent via the network 13 from the vehicle monitor server 221 is received.

At a step S251, when the vehicle operation information to be sent from the vehicle monitor server 221 is not received yet, the routine returns to the step S251 for repeated execution of the processing of step S215. Specifically, the processing of step S251 will be repeated until it is decided that the vehicle operation information is received at the step S251 due to the fact that the vehicle operation information is sent from the vehicle monitor server 221 in accordance with the operation of the mobile proximity radiocommunication terminal 12B to be done by the authorized person of the vehicle 11-1 whereby the mobile proximity radiocommunication terminal 12A receives such the vehicle operation information via the network 13. Additionally, at this time, in case the mobile proximity radiocommunication terminal 12A is a mobile cellular phone as an example, the mobile proximity radiocommunication terminal 12A is operating in its normal mode for performing telephone calls or data communications.

On the other hand, at the step S251, when it is decided that the vehicle operation information to be sent from the vehicle monitor server 221 is received, the routine goes to a step S252 which causes the control unit 51 to analyze the vehicle operation information as received from the vehicle monitor server 221 via the network 13, i.e., the vehicle operation information to be supplied from the communication unit 53. Practically, in case the vehicle operation information is constituted from an event-report application for providing the vehicle operation information, for example, the control unit 51 executes such event-report application.

At a step S253, a mode control unit 55 causes, based on an analysis result of the control unit 51, a present operation mode of the mobile proximity radiocommunication terminal 12A to transit to a vehicle communication mode. Concretely, in case the mobile proximity radiocommunication terminal 12A is a cellular phone for example, when the event-report application for providing the vehicle operation information is executed, the mode control unit 55 makes a change from the normal mode for performing telephone calls or data communications to the vehicle communication mode for communicating with the vehicle 11-1. More precisely, the mobile proximity radiocommunication terminal 12A downloads the event-report application for providing the vehicle operation information and then executes this event-report application to thereby perform mode transition into the vehicle communication mode.

Whereby, the mobile proximity radiocommunication terminal 12A becomes capable of communicating with the on-board proximity radiocommunication terminal 21 of the vehicle 11-1 by reception and analysis of the vehicle operation information although if this terminal is in the normal mode then it cannot communicate with the on-board proximity radiocommunication terminal 21 of vehicle 11-1. In other words, the mobile proximity radiocommunication terminal 12A which is a terminal having no relationship with the vehicle 11-1 transits to a prespecified state by reception and analysis of the vehicle operation information whereby it becomes possible to perform proximity communication with (the on-board proximity radiocommunication terminal 21 of) the vehicle 11-1.

At a step S254, the control unit 51 monitors a present state of proximity ID unit 56 to determine whether it is in the state capable of performing proximity communication with the on-board proximity radiocommunication terminal 21.

At the step S254, when it is determined that it is impossible to perform proximity communication with the on-board proximity radiocommunication terminal 21, the mobile proximity radiocommunication terminal 12A and on-board proximity radiocommunication terminal 21 are unable to perform any communication due to the positional relationship therebetween, for example, so that the routine goes back to the step S254 for repeated execution of the processing of step S254. Precisely, the process of step S254 will be repeated until it is decided at the step S254 that it is possible to perform proximity communication with the on-board proximity radiocommunication terminal 21 because of the fact that a third person who owns the mobile proximity radiocommunication terminal 12A holds his or her mobile proximity radiocommunication terminal 12A on or over (the on-board proximity radiocommunication terminal 21 of) the vehicle 11-1.

On the contrary, at the step S254, when it is decided that it is possible to perform proximity communication with the on-board proximity radiocommunication terminal 21, the routine goes to a step S255 which causes the proximity ID unit 56 to transmit the vehicle operation information by proximity communication to the on-board proximity radiocommunication terminal 21 under control of the control unit 51. Practically, the proximity ID unit 56 sends by proximity communication the vehicle operation information to the on-board proximity radiocommunication terminal 21, which information includes at least vehicle information of the vehicle 11-1 based on predetermined processing due to the event-report application being executed by the control unit 51 and information concerning a command for causing the vehicle 11-1 to perform a prespecified operation, such as stopping its engine, for example.

At a step S256, the control unit 51 monitors a present state of the proximity ID unit 56 to determine whether a vehicle operation reply is received by proximity communication from the on-board proximity radiocommunication terminal 21.

At the step S256, when it is determined that the vehicle operation reply is not received from the on-board proximity radiocommunication terminal 21, the vehicle 11-1 of interest is now performing an operation based on the vehicle operation information for example; so, the routine returns to the step S256, followed by repeated execution of the processing of the step S256. More specifically, the processing of step S256 will be repeated until it is decided at step S256 that the vehicle operation reply was received from the on-board proximity radiocommunication terminal 21 due to the fact that the operation based on the vehicle operation information is completed at the vehicle 11-1 whereby the vehicle operation reply is sent so that the mobile proximity radiocommunication terminal 12A receives such vehicle operation reply by proximity communication.

On the other hand, at the step S256, when it is decided that the vehicle operation reply is received from the on-board proximity radiocommunication terminal 21, the routine goes to a step S257, which permits the communication unit 53 to send the vehicle operation reply as received from the on-board proximity radiocommunication terminal 21, i.e., the vehicle operation reply to be supplied from the proximity ID unit 56, to the vehicle monitor server 221 via the network 13 under control of the control unit 51.

At a step S258, the mode control unit 55 performs mode transition of the mobile proximity radiocommunication terminal 12A to thereby force it change from the vehicle communication mode to its original mode under control of the control unit 51 and, thereafter, terminates the vehicle operation transfer processing to be done by the mobile proximity radiocommunication terminal 12A of Fig. 9. Concretely, in case the mobile proximity radiocommunication terminal 12A is a cellular phone for example, the mode control unit 55 forces the operation mode of the mobile proximity radiocommunication terminal 12A to transit from the vehicle communication mode for performing communication with the vehicle 11-1 into the normal mode which performs telephone calls and data communications. This allows the mobile proximity radiocommunication terminal 12A to return at its prior state which cannot communicate with the on-board proximity radiocommunication terminal 21 of vehicle 11-1, i.e., the state before reception and analysis of the vehicle operation information.

As apparent from the foregoing explanation, the mobile proximity radiocommunication terminal 12A transfers the vehicle operation information, which was received via the network 13 from the vehicle monitor server 221, to the on-board proximity radiocommunication terminal 21 by proximity communication.

Next, an explanation will next be given of vehicle operation information analysis processing to be performed by the on-board proximity radiocommunication terminal 21 of Fig. 9 with reference to the flowchart of Fig. 13.

At a step S291, the control unit 101 monitors a present state of proximity ID unit 102 to determine whether it is possible to perform proximity communication with the mobile proximity radiocommunication terminal 12A.

At the step S291, when it is determined that it is not possible to perform communication with the mobile proximity radiocommunication terminal 12A, e.g., when the mode of mobile proximity radiocommunication terminal 12A does not transit to the vehicle communication mode, it is impossible to communicate with the mobile proximity radiocommunication terminal 12A; so, the routine returns to the step S291 for repeated execution of the processing of step S291. Precisely, the processing of the step S291 will be repeated until it is decided at the step S291 that the proximity communication with mobile proximity radiocommunication terminal 12A is enabled due to the fact that the mobile proximity radiocommunication terminal 12A is held or "shaded" on (the on-board proximity radiocommunication terminal 21 of) the vehicle 11-1 by a third person who owns the mobile proximity radiocommunication terminal 12A so that the proximity communication becomes enabled.

On the other hand, at the step S291, when it is determined to be possible to perform proximity communication with the mobile proximity radiocommunication terminal 12A, the routine goes to a step S292 which causes the proximity ID unit 102 to receive by such proximity communication the vehicle operation information to be sent from the mobile proximity radiocommunication terminal 12A under the control of a control unit 101.

At a step S293, the control unit 101 analyzes the vehicle operation information as received from the mobile proximity radiocommunication terminal 12A, i.e., vehicle operation information to be supplied from the proximity ID unit 102. Concretely, the control unit 101 analyzes the vehicle operation information from the mobile proximity radiocommunication terminal 12A to thereby acquire vehicle information of the vehicle 11-1 being included in the vehicle operation information and a command for stopping its engine and then supplies the vehicle information to an authentication unit 103 while supplying the command to a vehicle control unit 106.

At a step S294, the authentication unit 103 uses both the vehicle information being supplied from the control unit 101 and the vehicle information being recorded in a recorder unit 104 to determine whether these vehicle information items are identical to each other under control of the control unit 101 to thereby authenticate the mobile proximity radiocommunication terminal 12A. More precisely, the authentication unit 103 determines under control of the control unit 101 whether the vehicle operation information received from the mobile proximity radiocommunication terminal 12A, i.e., the vehicle information being included in the vehicle operation information as instructed by the mobile proximity radiocommunication terminal 12B, is matched with the vehicle information being recorded in the recorder unit 104. Note here that as stated previously, the authentication unit 103 may be configured to read the vehicle information being stored in the vehicle information storage device 22, in place of the vehicle information as read out of the recorder unit 104, via the vehicle control unit 106 and a connection unit 107 for authentication under control of the control unit 101.

At a step S294, when it is decided that the vehicle information items are matched with each other, the routine goes to a step S295 which causes the vehicle control unit 106 to control the on-board device 231 via the connection unit 107 under control of the control unit 101. Concretely, the vehicle control unit 106 is responsive to receipt of the engine stop command included in the vehicle operation information as an example, for controlling the on-board device 231 for use as an engine control device via the connection unit 107 to thereby stop the engine (not shown) of the vehicle 11-1 (engine start inhibited). Thus it is possible for the authorized person of the vehicle 11-1 to operate the mobile proximity radiocommunication terminal 12B to thereby command the vehicle 11-1 to perform various operations by way of the network 13 and vehicle monitor server 221 and also mobile proximity radiocommunication terminal 12A.

While holding the mobile proximity radiocommunication terminal 12A on the vehicle 11-1 makes it possible to stop its engine in this way, this means that the mobile proximity radiocommunication terminal 12A is capable of being held over only when the vehicle 11-1 that is a stolen car is brought to a stop and that the holding action is unable to be done when the stolen car is running. In other words, the attempt to forcibly stop the engine by externally sending via remove communication a command for setting a traveling vehicle to the run-incapable state is very dangerous even if this is a stolen car. In view of this, in this embodiment, the action of holding or "shading" the mobile proximity radiocommunication terminal 12A in order to stop the engine is limited to the state that the vehicle 11-1 is being parked. Whereby, the mobile proximity radiocommunication terminal 12A cannot be shaded if the target vehicle 11-1 is not a parked car; thus, it is possible to set it in the run-incapable state with increased safety.

It should be noted that although in this embodiment the control of the on-board device 231 was explained by exemplifying the engine start inhibition, other control operations may also be employable; for example, an attempt may be made to inhibit steering unlock or prevent release of door lock in order to force the vehicle 11-1 to be set in the run-incapable state. Additionally, by performing control for release of door lock adversely, e.g., by sending vehicle control grant information (vehicle operation information) from a server of security company (vehicle monitor server 221) to a mobile proximity radiocommunication terminal 12A when a child is confined within a car due to the occurrence of a kidnapping case, a third person who downloaded the event-report application releases the locked door to rescue the child. Another example is that when a third person who found that a child is left within a vehicle 11 which is parked at car pool under the blazing sun uses the event-report application to take a photograph of such scene and sends a report, the vehicle control grant information (vehicle operation information) which enables reset of the door lock is sent to the mobile proximity radiocommunication terminal 12A after having asked for permission to a police from the security company, thereby making it possible to rescue the child in the sun-heated car.

At a step S296, the control unit 101 generates a vehicle operation reply corresponding to a control result of the on-board device 231 by way of the vehicle control unit 106 and supplies the generated vehicle operation reply to the proximity ID unit 102. More specifically, when the control unit 101 controls the on-board device 231 that functions as the engine control device via the vehicle control unit 106 to stop its engine successfully for example, the control unit 101 generates a vehicle operation reply indicating that the engine was stopped successfully.

At a step S297, the proximity ID unit 102 sends its vehicle operation reply to the mobile proximity radiocommunication terminal 12A by proximity communication under control of the control unit 101, followed by termination of the vehicle operation information analysis processing to be performed by the on-board proximity radiocommunication terminal 21 of Fig. 9.

On the contrary, at the step S294, when it is decided that the vehicle information fails to match, such car is not the aimed vehicle to be controlled to perform various operations. Thus, the routine skips the processing tasks of the steps 295 to S297, followed by completion of the vehicle operation analysis processing to be done by the on-board proximity radiocommunication terminal 21 of Fig. 9.

As apparent from the foregoing explanation, the on-board proximity radiocommunication terminal 21 controls the on-board device 231 based on the vehicle operation information as received from the mobile proximity radiocommunication terminal 12A by proximity communication to cause it to perform various operations.

By the way, although in the above description the two illustrative embodiments have been explained as the information processing system embodying the invention, such information processing system is employable, for example, as a system coping with the following event or phenomenon.

More specifically, for example, suppose that a vehicle 11 is stolen, to which is attached a theft alarm device (e.g., on-board device 231) capable of externally notifying abnormality contents and a present location of the vehicle 11 via a wireless packet communications network (e.g., via the network 13) for example. Also assume that the vehicle 11 becomes unable to communicate with the outside due to the fact that its antenna for link with the wireless packet communications network is taken away by a criminal person (alternatively, jamming waves are generated) immediately after the car was stolen, resulting in the theft alarm device becoming unable to inform its present location from a halfway point. Further, the criminal person is driving the vehicle 11 with its number plate being replaced by another so that it is impossible to find this vehicle 11 even when its car type and body color are known.

Under such conditions, abnormality is detected by the theft alarm device (e.g., sensor of the on-board device) prior to detachment of the car antenna, which abnormality is then notified by E-mail or the like to the mobile proximity radiocommunication terminal 12B of an authorized person (also called "user" hereinafter) of the vehicle 11-1 via a server of security company (e.g., checkup information center server 14, vehicle monitor server 221 or else).

When the authorized user who recognized the contents of such E-mail makes a click on URL (Uniform Resource Locator) as written in the E-mail, a link is established to the user service to be provided by the server of the security company. When a theft report button on a user service screen is pushed by a manual operation of the user, theft verify information is notified to the security company server while at the same time making a phone call to speak with an operator of the security company.

Meanwhile, on the security company side, both the preregistered information, such as a car type, registered number (information of number plate), color, etc., and the information concerning the contractant and subscribed vehicle 11, such as contract contents, are displayed on the screen of the operator's terminal based on the theft verify information as sent from the user's mobile proximity radiocommunication terminal 12B. In brief, the operator has a conversion with the reporting user while referring to these information items.

Note that the preregistered information may be designed to include identification information for image recognition of the vehicle 11 by a camera mounted in the mobile proximity radiocommunication terminal 12.

The user sends to the operator a message regarding a present state of the vehicle 11, such as features of the vehicle 11. The features are profiles unique to the vehicle other than the car type, body color and the like, such as for example "The car is soiled from the dirt because it has run on dirt non-paved pathways although no rain falls at nearby locations in this season," "It is attached with a blue ski carrier," "Seals of HOKKAIDO and KYUSHU, which are the names of places far from an affected area of car theft, are put on its rear window," and so forth.

The operator registers the information concerning the vehicle 11 as sent from the user to the server's theft information database. In other words, the information of a land location at which the vehicle 11 was last affirmed and the information indicating the features of vehicle 11 are stored in the server of the security company. Additionally the security company server sends an E-mail for startup of an event-report application used to provide the vehicle operation information to the mobile proximity radiocommunication terminal 12A that has downloaded the event-report application. This E-mail contains chase range information at the time the request was made.

Here, the chase range is the one that defines certain conditions for asking confirmation of the user (third person) of the mobile proximity radiocommunication terminal 12A, for example, it is designated by position information. Concretely, for example, the chase range is set to a geographic area of within 30Km from the car-stolen point. Another example of the chase range is an area that the vehicle 11 can reach such land point from the location at which the vehicle 11 was last affirmed.

An example of the method of specifying the mobile proximity radiocommunication terminal 12A that downloaded the event-report application is a method for recording log information when the mobile proximity radiocommunication terminal 12A downloaded the event-report application, thereby making it possible to specify the target car.

At the mobile proximity radiocommunication terminal 12A that received the E-mail, an event-report application pursuant to this E-mail gets started. Upon startup, the event-report application acquires position information by use of a GPS unit which is equipped in the mobile proximity radiocommunication terminal 12A, for example, to determine whether a present location of the mobile proximity radiocommunication terminal 12A falls within the range defined by the chase range information. If a present location of the mobile proximity radiocommunication terminal 12A is within the range of the chase range information then the event-report application receives information concerning the vehicle 11 from the security company server. If the terminal location is out of the range of the chase range information then the event-report application is shut down.

At the mobile proximity radiocommunication terminal 12A that received the information as to the vehicle 11 from the security company server, it notifies the third person of the presence of information, by displaying the information on a stand-by screen or by using an alarm/vibration function of the mobile proximity radiocommunication terminal 12A.

When a content verify operation is performed by the third person in response to this notification, the mobile proximity radiocommunication terminal 12A that downloaded the event-report application displays on its screen the information concerning the stolen car as received from the security company server. Whereby, the third person who owns the mobile proximity radiocommunication terminal 12A that downloaded the event-report application is expected to affirm the contents of such display screen. On this screen, it is also indicated a text message saying that these is no guarantee that an entirety of such contents is always correct. In other words, it is displayed that these is the possibility that the car's number plate has been replaced by a criminal person with another, for example.

As examples of this solvable event to be assumed in this situation, six cases will be indicated below.

The first case is as follows. The third person who found the vehicle 11 with the target number plate holds his or her mobile proximity radiocommunication terminal 12A on or over the vehicle 11, resulting in a present location of this vehicle 11 being notified to the security company server, thereby enabling a security guard(s) to rush to the scene.

As the second case, a third person who discovered a dirt-contaminated vehicle 11 with a blue ski carrier being attached thereto holds his or her mobile proximity radiocommunication terminal 12A on or over the vehicle 11 to thereby find the stolen car.

As the third case, a third person who is not aware of the target vehicle 11 discovers a suspicious vehicle 11 which is parked in front of his or her house and takes a photo picture of the vehicle 11 by a camera of the mobile proximity radiocommunication terminal 12A and then makes inquires to the security company server, resulting in its features being found to match the features of the vehicle 11, followed by holding his or her mobile proximity radiocommunication terminal 12A on or over the vehicle 11, thereby making it possible to find the stolen car.

As the fourth case, a third person who found a car with pasted HOKKAIDO and KYUSHU seals although the ski carrier was removed therefrom and the car has been washed holds or "shades" his or her mobile proximity radiocommunication terminal 12A on the vehicle 11 to thereby make it possible to discover the stolen car.

As the fifth case, a police officer in the process of checking passers in a separate incident finds a car with its number plate removed away and then shades his or her mobile proximity radiocommunication terminal 12A, thereby making it possible to discover the stolen car.

As the sixth case, a used car dealer who is asked to buy a vehicle 11 which is brought into the shop shades his or her mobile proximity radiocommunication terminal 12A, thereby making it possible to discover the stolen car. Note that in this case, the enquiry of a stolen car does not lead to discovery because its number plate is lost since such vehicle is a used car: as in this embodiment, it becomes possible to discover such stolen car by affirmation after having shaded the mobile proximity radiocommunication terminal 12A.

Thereafter, the mobile proximity radiocommunication terminal 12A transmits to the vehicle 11 that is a stolen car a command for stopping its engine, thereby making it possible to prevent the engine of vehicle 11 from getting started. Thus, even when a criminal person returns, it becomes impossible to drive this stolen car.

In this way, in the case of having no long-distance communication-capable communication means or in the case of being unable to communicate with outside due to out-of-service or due to either malfunction of communication circuitry or presence of jamming waves even when it is possible to notify abnormality to the outside by use of a cellular phone network via wireless packet communication network, use of the information processing system embodying the invention makes it possible to perform a proper operation pursuant to either an event detected by (a server of) the outside or situation judgment to be done by a person with respect to an on-board device which cannot transmit information to the outside and cannot receive any externally sent information, by shading the mobile proximity radiocommunication terminal 12A of the authorized person of the vehicle 11 or a bona-fide third person via the mobile proximity radiocommunication terminal 12 (owing to the functionality of the mobile proximity radiocommunication terminal 12).

In addition, the information as to the stolen car is transferred to the third person who downloaded the event-report application into the mobile proximity radiocommunication terminal 12 so that it becomes possible for the third person to easily discover the stolen car based on such information.

In other words, according to this invention, an authorized person of a vehicle 11 or a bona-fide third person shades his or her mobile proximity radiocommunication terminal 12, such as a mobile phone or else, on an on-board device which is presently in the state that cannot perform long-distance communications and thus cannot send information to the outside or cannot receive externally sent information to thereby make it possible to perform a proper operation pursuant to either an event detected by an external server via the mobile proximity radiocommunication terminal 12 (owing to the functionality of the mobile proximity radiocommunication terminal 12) or situation judgment to be done by a person based on the information as provided from the server.

Additionally, even in the case of being unable to perform communication from the vehicle 11, such as when the radio antenna of a theft alarm device was cut away or when jamming waves are generated, a third person who owns the mobile proximity radiocommunication terminal 12, such as a cellular phone or else, shades this mobile proximity radiocommunication terminal 12 on the vehicle 11 to thereby make it possible to exclude these factors.

The above-stated series of processing tasks may be executed by hardware or may alternatively be executed by software. In the case of the series of tasks being executed by software, a program making up such software is installed from program recording media into a computer mounted in a dedicated hardware structure or into a general-purpose personal computer capable of executing various kinds of functions by installation of various types of programs, for example.

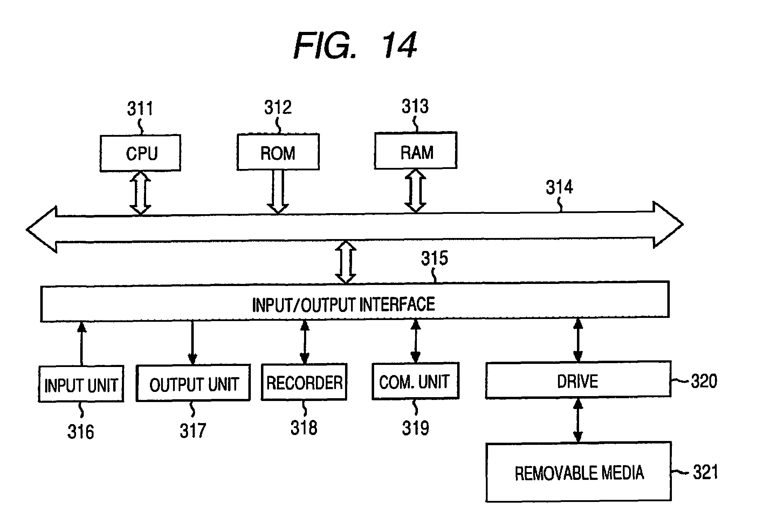

Fig. 14 is a block diagram showing an example of a configuration of a personal computer which executes the above-stated series of processing tasks by a software program. A CPU 311 executes various kinds of tasks in accordance with the program, which is stored in a ROM 312 or in a recorder unit 318. A RAM 313 temporarily stores the program to be executed by the CPU 311 and its associated data on a case-by-case basis. These CPU 311, ROM 312 and RAM 313 are connected together by a bus 314.

An input/output interface 315 is also connected to the CPU 311 via the bus 314. To the input/output interface 315, an input unit 316 having a microphone or else and an output unit 317 having a display and audio speaker (s) are connected. The CPU 311 executes various kinds of processing tasks in a way corresponding to instructions as input from the input unit 316. And, the CPU 311 outputs processing results to the output unit 317.

The recorder unit 318 that is connected to the input/output interface 315 is made up of a hard disk for example and records the program being executed by CPU 311 along with its related data. A communication unit 319 provides communications with an external device via a network, such as the Internet or a local area network.

Alternatively, it may obtain the program via the communication unit 319 and record it in the recorder unit 318.

A drive 320 that is connected to the input/output interface 315 is such that when a removable media 321 is loaded thereinto, such as a magnetic disk, optical disc, magneto-optical disk or semiconductor memory, it drives such media to acquire a program and data being recorded thereon. The program and data thus acquired will be transferred to the recorder unit 318 and recorded therein.

As shown in Fig. 14, a program recording medium storing therein a program executable by a computer after installation is performed by a removable media 321 which is a package media constituted from a magnetic disk (including flexible disk), optical disc (including CD-ROM, DVD), magneto-optical disk or semiconductor memory or ROM 312 with the program being stored therein temporarily or permanently or, alternatively, a hard disk making up the recorder unit 318. Storage of the program in such program recording medium is performed by use of wired or wireless communication media, such as a local area network, Internet, digital satellite broadcast system, etc., by way of the communication unit 319 which is an interface, such as a router, modem or the like, when the need arises.

Note that in this specification, the steps for describing the program to be stored in the recorder unit include not only the processing to be time-sequentially performed according to the order described but also any available processing to be executed in parallel or individually rather than in the time-sequential manner.

Also note that in this specification, the term system is used to mean an entirety of apparatus made up of a plurality of devices.

Further note that the embodiments of this invention are not limited only to the above-stated embodiments and may be modified and altered in a variety of forms without departing from the true spirit and scope of the invention.

## Claims

1. An information processing system comprising a mobile electronic device and an information processing apparatus to be mounted on a vehicle, wherein
the electronic device includes:
first reception means for receiving first information to be sent from another information processing apparatus, which information is for transition to a state for performing proximity communication with the information processing apparatus;
first control means for controlling, based on the first information received, a state in such a way as to transit into the state for performing proximity communication with the information processing apparatus; and
transmission means for sending, when being in the state capable of performing proximity communication with the information processing apparatus, second information to the information processing apparatus, the second information being for control of a predetermined operation in relation to the vehicle, and
the information processing apparatus includes:
second reception means for receiving the second information as sent from the electronic device; and
second control means for controlling the predetermined operation relating to the vehicle based on the second information received.

2. An information processing apparatus to be mounted on a vehicle for performing, based on first information for transition to a state for performing proximity communication, mutual proximity communication with a mobile electronic device being presently transited to the state for performing proximity communication, the apparatus comprising:
reception means for receiving, when being set in the state capable of performing proximity communication with the electronic device, second information as sent from the electronic device for allowing itself to control a prespecified operation in relation to the vehicle; and
control means for controlling the prespecified operation relating to the vehicle based on the second information received.

3. The information processing apparatus according to claim 2, further comprising:
detection means for detecting abnormality occurring at the vehicle; and
transmission means for sending, when the abnormality is detected, third information to the electronic device, the third information being for identification of the vehicle.

4. The information processing apparatus according to claim 3, further comprising:
authentication means for authenticating whether a person who owns the electronic device is an authorized person of the vehicle, wherein the transmission means is responsive to detection of the abnormality, for sending the third information to the electronic device when failing to authenticate as the authorized person of the vehicle.

5. The information processing apparatus according to claim 2, further comprising:
authentication means for determining whether the second information received is information that has been sent to itself, wherein
when it is verified to be the information that has been sent to itself, the control means controls an operation of an on-board apparatus to be mounted on the vehicle based on the second information received.

6. An information processing method for use in an information processing apparatus to be mounted on a vehicle for performing, based on first information which permits transition to a state for performing proximity communication, mutual proximity communication with a mobile electronic device being presently transited to the state for performing proximity communication, the method comprising:
a first control step of controlling, when being set in a state capable of performing proximity communication with the electronic device, reception of second information to be sent to itself from the electronic device for control of a prespecified operation relating to the vehicle; and
a second control step of controlling the prespecified operation relating to the vehicle based on the second information received.

7. A program for causing a computer of an information processing apparatus to be mounted on a vehicle for performing mutual proximity communication with a mobile electronic device being presently transited to a state for performing proximity communication based on first information for transition to the state for performing proximity communication to perform information processing, the program comprising:
a first control step of controlling, when being set in a state capable of performing proximity communication with the electronic device, reception of second information to be sent to itself from the electronic device for control of a prespecified operation relating to the vehicle; and
a second control step of controlling the prespecified operation relating to the vehicle based on the second information received.
